# EUROPEAN PATENT APPLICATION

(11) **EP 4 624 212 A1**
(43) Date of publication of application: **01.10.2025**
(21) Application number: 22969906.1
(22) Date of filing: 31.12.2022
(51) Int. Cl.: B60K 1/04, B60L 53/80

(54) **BATTERY, VEHICLE AND BATTERY SWAPPING STATION**

(71) Applicant: Contemporary Amperex Technology Co., Limited, Ningde, Fujian 352100 (CN)
(72) Inventor: CAO, Gen, Ningde, Fujian 352100 (CN); CHAN, Libing, Ningde, Fujian 352100 (CN); JIANG, Yuwei, Ningde, Fujian 352100 (CN); LIU, Bin, Ningde, Fujian 352100 (CN)
(74) Representative: Gong, Jinping
(86) International application number: PCT/CN2022/144392
(87) International publication number: WO 2024/138766

(57) **Abstract**

Provided are a battery, a vehicle, and a battery swapping station. The battery includes a battery cell, a housing, and a mounting structure and a docking structure that are disposed at the housing. The battery cell is accommodated in the housing. The mounting structure is adapted to be located between the housing and a vehicle-bottom longitudinal beam of a vehicle, and is configured to detachably mount the battery to the vehicle-bottom longitudinal beam. The docking structure is configured to dock with the vehicle to allow for current conduction and/or liquid conduction.

## Description

### FIELD

The present disclosure relates to the field of battery technologies, and more particularly, to a battery, a vehicle, and a battery swapping station.

### BACKGROUND

Generally, a battery does not have a mounting structure on its housing. When such a battery is mounted to a vehicle, the battery needs to be loaded into a battery swapping frame accommodating the battery first, and then the battery swapping frame is locked and attached to the vehicle. Since the introduction of the battery swapping frame results in the need for a larger mounting space, in a case where a space at a bottom of the vehicle is limited, a volume energy density of the battery is made difficult to be improved, which affects endurance mileage of the vehicle. Moreover, because of a small height of the battery above ground, during a battery swapping operation, a battery swapping station needs to be trenched or the vehicle needs to be lifted, resulting in a high battery swapping cost.

### SUMMARY

Embodiments of the present disclosure provide a battery, a vehicle, and a battery swapping station, which can omit a battery swapping frame.

In a first aspect, an embodiment of the present disclosure provides a battery, including a battery cell, a housing, and a mounting structure and a docking structure that are disposed at the housing. The battery cell is accommodated in the housing. The mounting structure is adapted to be located between the housing and a vehicle-bottom longitudinal beam of a vehicle, and is configured to detachably mount the battery to the vehicle-bottom longitudinal beam. The docking structure is configured to dock with the vehicle to allow for current conduction and/or liquid conduction.

In the above technical solution, the mounting structure is disposed at the housing of the battery and is detachably connected to the vehicle-bottom longitudinal beam, so that the battery can be mounted to the vehicle-bottom longitudinal beam by using the mounting structure, to realize the mounting of the battery to the vehicle. Therefore, a battery swapping frame used for accommodating the battery in the related art is omitted, and a mounting space proportion of the battery swapping frame is reduced. Further, a volume energy density of the battery can be increased. Moreover, since the battery swapping frame is omitted, the cost can be reduced, a load of the whole vehicle can be reduced, and battery swapping efficiency can be improved. Moreover, since the battery swapping frame is omitted, a space of the battery above the ground can be increased, which is beneficial to the battery swapping operation. In some cases, the battery swapping station does not need to be trenched, and the vehicle does not need to be lifted, so that battery swapping can be realized, and a battery swapping cost is lowered.

In some embodiments, the docking structure is located at other surfaces of the housing other than a bottom wall and an outer peripheral wall of the housing.

In some embodiments, the housing has a recess defined at atop of the housing. The recess is adapted to accommodate the vehicle-bottom longitudinal beam, and the docking structure is located in the recess.

In some embodiments, the docking structure is located at a bottom wall of the recess.

In some embodiments, the docking structure is located at a side wall of the recess.

In some embodiments, the docking structure is disposed at a top wall of the housing.

In some embodiments, the docking structure is located at a transverse center position of a top of the housing.

In some embodiments, the docking structure is located at a longitudinal center position of a top of the housing.

In some embodiments, a docking surface of the docking structure faces upwards to allow for docking in a vertical direction.

In some embodiments, a docking surface of the docking structure faces horizontally to allow for docking in a horizontal direction.

In some embodiments, the docking structure includes a plurality of sub-docking portions having different docking functions.

In some embodiments, the plurality of sub-docking portions has the same docking direction.

In some embodiments, the plurality of sub-docking portions is arranged at intervals in a transverse direction and/or a longitudinal direction of the housing.

In some embodiments, the docking structure and the mounting structure are located on a surface of the housing at one side of the housing.

In some embodiments, the docking structure and the mounting structure are located on surfaces of the housing at different sides of the housing.

In some embodiments, a position of the docking structure is adjustable relative to the housing.

In some embodiments, the mounting structures at the housing are transversely spaced apart from each other to be respectively disposed at two transverse sides of the vehicle-bottom longitudinal beam.

In some embodiments, the mounting structures at the two transverse sides are symmetrically arranged.

In some embodiments, the mounting structures at the two transverse sides are offset from each other in a longitudinal direction.

In some embodiments, the housing has a recess defined at atop of the housing. The recess is adapted to accommodate the vehicle-bottom longitudinal beam, and the mounting structure is located in the recess.

In some embodiments, the mounting structure is located on at least one of two transverse side walls of the recess.

In some embodiments, the mounting structure includes a plurality of sub-mounting portions disposed at one side wall.

In some embodiments, two or three sub-mounting portions included in the mounting structure are provided.

In some embodiments, the plurality of sub-mounting portions at one side wall are arranged at intervals in a longitudinal direction.

In some embodiments, the mounting structure is located at a position of a side wall of the recess close to a bottom wall of the recess.

In some embodiments, the mounting structure is located at a vertical center position of the housing.

In some embodiments, a position of the mounting structure is adjustable relative to the housing.

In some embodiments, a longitudinal dimension L1 of the battery is smaller than a transverse dimension L2 of the battery.

In some embodiments, the housing includes a housing body and a housing cover. The housing body is an integrally-formed part and has an opening defined thereon. The housing cover covers the opening. The mounting structure and the docking structure are each disposed at the housing body or at the housing cover; or one of the mounting structure and the docking structure is disposed at the housing body, and another one of the mounting structure and the docking structure is disposed at the housing cover.

In some embodiments, the docking structure is located outside the housing.

In a second aspect, an embodiment of the present disclosure provides a vehicle, including a vehicle-bottom longitudinal beam and the battery as described above.

In some embodiments, the vehicle-bottom longitudinal beam has a connection structure. The mounting structure is detachably connected to the connection structure. At least one of the mounting structure and the connection structure is a locking structure, and an unlocking position of the locking structure is located at a longitudinal outer side of the battery.

In some embodiments, the vehicle-bottom longitudinal beam includes two longitudinal beams arranged in parallel. The docking structure is disposed at a top of the battery and configured to be extended into a space between the two longitudinal beams.

In a third aspect, an embodiment of the present disclosure provides a battery swapping station, configured to replace a battery for the vehicle as described above.

In some embodiments, the battery swapping station includes a battery swapping region. The vehicle is adapted to replace the battery in the battery swapping region. The battery swapping region includes a first region and a second region. The first region is adapted to be located directly below the battery. The second region is configured to support a front wheel and a rear wheel that are adjacent to the battery, and a ground at the first region is flush with a ground at the second region.

### BRIEF DESCRIPTION OF THE DRAWINGS

In order to explain technical solutions of embodiments of the present disclosure more clearly, accompanying drawings needing to be used in the embodiments will be briefly described below. It should be understood that the following drawings illustrate only some embodiments of the present disclosure and therefore should not be construed as limiting the scope of the present disclosure. Based on these drawings, other related drawings can be obtained by those of ordinary skill in the art without creative effort.
FIG. 1 is a schematic view of a vehicle according to some embodiments of the present disclosure.
FIG. 2 is a perspective view of a battery according to some embodiments of the present disclosure.
FIG. 3 is an exploded view of the battery shown in FIG. 2.
FIG. 4 is an assembly view of a battery and a vehicle-bottom longitudinal beam according to some embodiments of the present disclosure.
FIG. 5 is an exploded view of a battery and a vehicle-bottom longitudinal beam according to some embodiments of the present disclosure.
FIG. 6 is a front view of a battery according to some embodiments of the present disclosure.
FIG. 7 is an assembled view of the battery and the vehicle-bottom longitudinal beam shown in FIG. 6.
FIG. 8 is a cross-sectional view of a battery according to some embodiments of the present disclosure.
FIG. 9 is a top view of a battery according to some embodiments of the present disclosure.
FIG. 10 is an assembled top view of a battery and a vehicle-bottom longitudinal beam according to some embodiments of the present disclosure.
FIG. 11 is a schematic view of an interior of a battery according to some embodiments of the present disclosure.
FIG. 12 is an assembled side view of a battery and a vehicle-bottom longitudinal beam according to some embodiments of the present disclosure.
FIG. 13 is a schematic plane view of a battery swapping station according to some embodiments of the present disclosure.

### Reference numerals:

vehicle 1000; battery 1; recess 10; bottom wall of recess 10a; side wall of recess 10b; battery layer 2; battery module 3; battery cell 4; housing 5; bottom wall of housing 50a; outer peripheral wall of housing 50b; top wall of housing 50c; first housing portion 51; second housing portion 52; housing body 53; housing cover 54; mounting structure 6; sub-mounting portion 61; docking structure 7; sub-docking portion 71; first sub-docking portion 71a; second sub-docking portion 71b; box body 72; docking body 73; docking header 74; temperature adjustment plate 8; first adjustment plate 81; second adjustment plate 82; third adjustment plate 83; fourth adjustment plate 84; fifth adjustment plate 85; common horizontal plate 86; vehicle-bottom longitudinal beam 200; longitudinal beam 201; connection structure 300; front wheel 400; rear wheel 500; battery swapping station 2000; battery swapping region 600; first region 601; second region 602; transverse direction Y; longitudinal direction X; vertical direction Z.

### DETAILED DESCRIPTION

In order to make the purpose, technical solution and advantages of embodiments of the present disclosure clearer, the following will provide a clear description of the technical solution in the embodiments of the present disclosure in combination with the accompanying drawings in the embodiments of the present disclosure. Obviously, the described embodiments are some of the embodiments of the present disclosure, rather than all of them. Based on the embodiments of the present disclosure, all other embodiments obtained by those skilled in the art without any inventive effort fall within the scope of the present disclosure.

Unless otherwise defined, all technical and scientific terms used herein have the same meaning as commonly understood by those skilled in the art of the present disclosure. Terms in a specification of the present disclosure herein are only used for the purpose of describing specific embodiments, and are not intended to limit the present disclosure. The terms "including", "having" and any variation thereof in the description and claims of the present disclosure and in the preceding description of the drawings are intended to cover non-exclusive inclusion. In the description and claims of the present disclosure or in the preceding description of the drawings, the terms "first", "second" and the like are used to distinguish different objects, rather than describing a particular order or a primary and secondary relation.

In the present disclosure, reference to "embodiment" means that a particular feature, structure, or characteristic described in conjunction with the embodiment may be included in at least one embodiment of the present disclosure. The presence of the term at each place in the description does not necessarily refer to the same embodiment, nor does it refer to a separate or alternative embodiment that is mutually exclusive of other embodiments.

In the description of the present disclosure, it should be noted that, unless otherwise clearly specified and limited, terms such as "connected" and "connected to" should be understood in a broad sense. For example, it may be a fixed connection or a detachable connection or connection as one piece; or a direct connection or an indirect connection through an intermediate. For those of ordinary skill in the art, the specific meaning of the above terms in the present disclosure should be understood according to specific circumstances.

In the present disclosure, the term "and/or" only represents a relationship between correlated objects, including three relationships. For example, "A and/or B" may mean three situations: A only, B only, or both A and B. In addition, the character "/" in the present disclosure generally represents an "or" relationship between the correlated objects preceding and succeeding the character.

In the embodiments of the present disclosure, the same reference numerals denote the same components, and a detailed description of the same components is omitted in different embodiments for the sake of brevity. It is to be understood that the thickness, length, width, and other dimensions of the various components in the embodiments of the present disclosure illustrated in the drawings, as well as the overall thickness, length, width, and other dimensions of the integrated device, are illustrative only and should not be construed to limit the present disclosure in any way.

The term "a plurality of" as used herein refers to two or more (including two).

The battery cell in the present disclosure may include a lithium ion secondary battery, a lithium ion primary battery, a lithium sulfur battery, a sodium lithium ion battery, a sodium ion battery or a magnesium ion battery, etc., which are not limited in the embodiments of the present disclosure. The battery cell may be in a shape of a cylinder, a flat body, a cuboid shape or other shapes, which are not limited in the embodiments of the present disclosure. The battery cell is generally divided into three types based on a packaging method: a cylinder-shaped battery cell, a square-shaped battery cell and a soft-pack battery cell, which are not limited in the embodiment of the present disclosure.

The battery mentioned in the embodiments of the present disclosure refers to a single physical module including one or more battery cells to provide a higher voltage and capacity. The battery in the embodiments of the present disclosure includes a housing for packaging one or more battery cells or a plurality of battery modules. The housing can prevent liquid or other foreign matter from affecting charging or discharging of the battery cell.

In the battery, a plurality of battery cells may be connected in series or in parallel or in series and parallel. The expression "in series and parallel" means that the plurality of battery cells is connected both in series and in parallel. The plurality of battery cells may be directly connected in series or in parallel or in series and parallel, and then accommodated in the housing as a whole. Of course, for the battery, the plurality of battery cells may be connected in series or in parallel or in series and parallel to form a battery module, and then a plurality of battery modules may be connected in series or in parallel or in series and parallel and accommodated in the housing as a whole. In addition, the battery may further have other structures. For example, the battery may further include a busbar configured to implement an electrical connection between the plurality of battery cells.

The battery cell includes a packaging housing, an electrode assembly, and an electrolyte. The packaging housing is configured to accommodate the electrode assembly and the electrolyte. The electrode assembly consists of a positive electrode plate, a negative electrode plate and a separator. Operation of the battery cell primarily relies on a movement of metallic ions between the positive and negative electrode plates. The positive electrode plate includes a positive current collector and a positive electrode active material layer. The positive electrode active material layer is coated at a surface of the positive current collector. A part of the positive current collector that is not coated with the positive electrode active material layer protrudes from a part of the positive current collector that has been coated with the positive electrode active material layer. The part of the positive current collector that is not coated with the positive active material layer serves as a positive electrode tab. A lithium-ion battery is taken as an example, a material of the positive current collector may be aluminum, and a positive electrode active material may be lithium cobalt oxide, lithium iron phosphate, ternary lithium or lithium manganate, etc. The negative electrode plate includes a negative current collector and a negative electrode active material layer. The negative electrode active material layer is coated at a surface of the negative current collector. A part of the negative current collector that is not coated with the negative electrode active material layer protrudes from a part of the negative current collector that has been coated with the negative electrode active material layer. The part of the negative current collector that is not coated with the negative electrode active material layer serves as a negative electrode tab. A material of the negative current collector may be copper, and a negative electrode active material may be carbon, silicon, etc. For ensuring no fusing during passing through a high current, a plurality of positive electrode tabs is provided and stacked together, and a plurality of negative electrode tabs is provided and stacked together. In addition, the electrode assembly may have a winding structure or a laminated structure, and the embodiments of the present disclosure are not limited thereto.

In recent years, new energy vehicles have developed by leaps and bounds. In the field of electric vehicles, batteries play an irreplaceable and important role as a power source of electric vehicles. As a core component of new energy vehicles, batteries have high requirements in terms of safety and cycle service life.

The inventor finds that a battery generally does not have a mounting structure on its housing. When such a battery is mounted to a vehicle, the battery needs to be loaded into a battery swapping frame accommodating the battery first, and then the battery swapping frame is locked and attached to the vehicle. Since the introduction of the battery swapping frame results in the need for a larger mounting space, in a case where a space at a bottom of the vehicle is limited, a volume energy density of the battery is made difficult to be improved, which affects endurance mileage of the vehicle. Moreover, because of a small height of the battery above ground, during a battery swapping operation, a battery swapping station needs to be trenched or the vehicle needs to be lifted, resulting in a high battery swapping cost.

Based on the above considerations, the inventor has designed a battery through in-depth research. The mounting structure is disposed at the housing of the battery and is detachably connected to the vehicle-bottom longitudinal beam, so that the battery can be mounted to the vehicle-bottom longitudinal beam by using the mounting structure, to realize the mounting of the battery to the vehicle. Therefore, the battery swapping frame used for accommodating the battery in the related art is omitted, and a mounting space proportion of the battery swapping frame is reduced. Further, the volume energy density of the battery can be increased, and the height of the battery above the ground is increased to some extent. Therefore, in some cases, the battery swapping station does not need to be trenched, and the vehicle does not need to be lifted, so that a battery swapping cost is lowered.

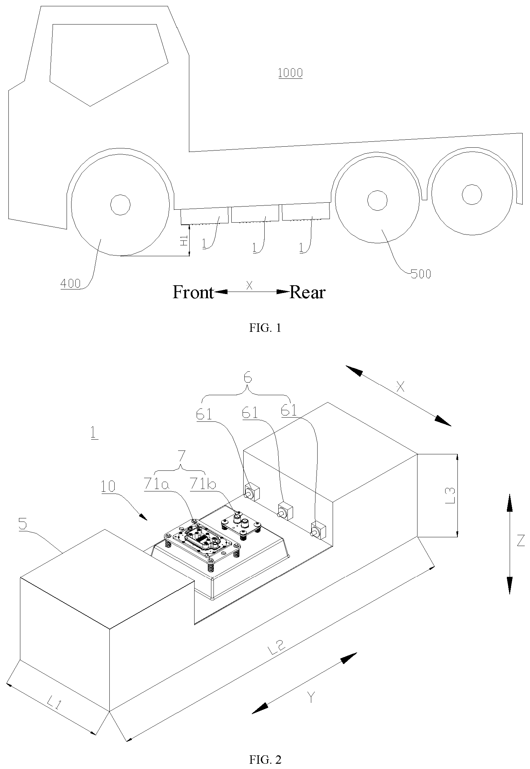

FIG. 1 is a schematic structural view of a vehicle 1000 according to some embodiments of the present disclosure. With reference to FIG. 1, the vehicle 1000 may be a fuel vehicle, a gas vehicle or a new energy vehicle. The new energy vehicle may be a pure electric vehicle, a hybrid vehicle or an extended-range vehicle, etc. The battery 1 may be configured to supply power to the vehicle 1000. For example, the battery 1 may serve as an operating power source for the vehicle 1000. The vehicle 1000 may also include a controller and a motor. The controller is configured to control the battery 1 to supply power to the motor, for example, to satisfy operational power consumption requirements for starting, navigation and driving of the vehicle 1000. In some embodiments of the present disclosure, the battery 1 can not only serve as an operating power supply of the vehicle 1000, but also can serve as a drive power supply of the vehicle 1000 to replace or partially replace fuel or natural gas to provide driving power for the vehicle 1000.

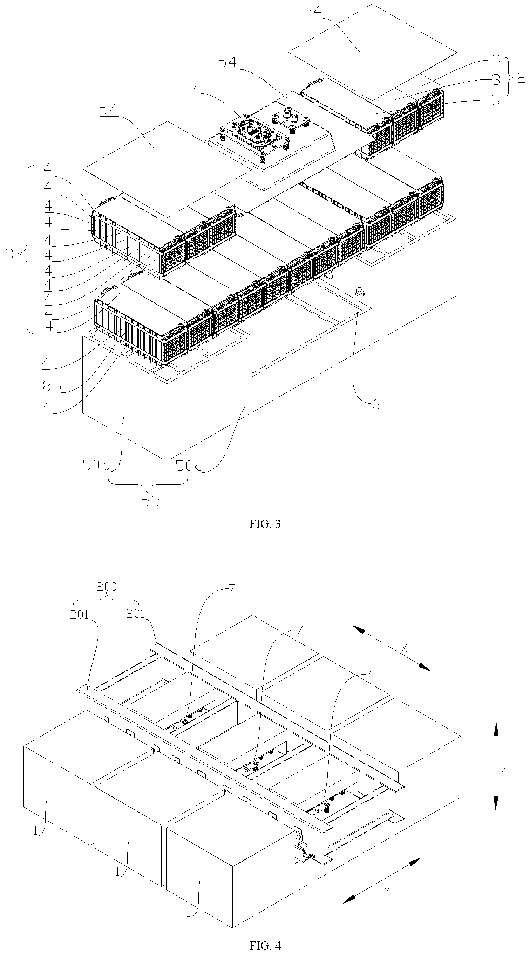

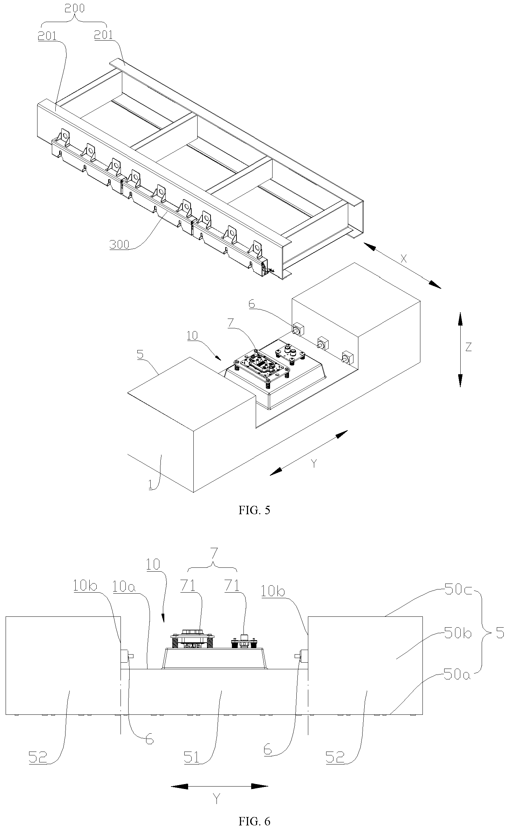

As shown in FIG. 2 and FIG. 3, the battery 1 includes a battery cell 4, a housing 5, a mounting structure 6 disposed at the housing 5 and a docking structure 7 disposed at the housing 5. The battery cell 4 is accommodated in the housing 5. In combination with FIG. 4 and FIG. 5, the mounting structure 6 is adapted to be located between the housing 5 and the vehicle-bottom longitudinal beam 200 of the vehicle 1000, and the mounting structure 6 is configured to detachably mount the battery 1 to the vehicle-bottom longitudinal beam 200. The docking structure 7 is configured to dock with the vehicle 1000 to allow for current conduction and/or liquid conduction.

In the present disclosure, a "longitudinal direction" refers to a length direction of the vehicle 1000 (like an X direction marked in FIG. 4) or a front-rear direction of the vehicle 1000; a "transverse direction" refers to a width direction of the vehicle 1000 (like a Y direction marked in FIG. 4) or a left-right direction of the vehicle 1000; and a "vertical direction" refers to a height direction of the vehicle 1000 (like a Z direction marked in FIG. 4) or an up-down direction of the vehicle 1000.

In the above embodiments, a number and an arrangement manner of battery cells 4 accommodated in the housing 5 are not limited. One or more battery cells 4 accommodated in the housing 5 may be provided. When a plurality of battery cells 4 is provided, the plurality of battery cells 4 may be arranged in groups or arranged separately.

In the above embodiment, a manner where the mounting structure 6 is disposed on the housing 5 is not limited. The mounting structure 6 and the housing 5 may be integrally formed; or the mounting structure 6 and the housing 5 may be formed separately, and the mounting structure 6 is directly or indirectly mounted to the housing 5. In the above embodiment, since the mounting structure 6 detachably mounts the battery 1 to the vehicle-bottom longitudinal beam 200, the battery 1 is detachable relative to the vehicle 1000, thereby satisfying the requirements of replacement, charging, maintenance, and the like of the battery 1.

Furthermore, it should be noted that a connection manner of the mounting structure 6 and the vehicle-bottom longitudinal beam 200 is not limited. It can be that the mounting structure 6 is directly connected to a part of the vehicle-bottom longitudinal beam 200 itself facing towards the mounting structure 6, or that the mounting structure 6 is indirectly connected to the connection structure 300 that is disposed on the vehicle-bottom longitudinal beam 200 and faces towards the mounting structure 6.

In addition, it should be noted that a connection position of the mounting structure 6 and the vehicle-bottom longitudinal beam 200 is not limited. For example, it can be that the mounting structure 6 is connected to at least one of a top part, a bottom part, and a side part of the vehicle-bottom longitudinal beam 200.

The battery in the related art has no mounting structure. When such a battery is mounted to the vehicle, the battery needs to be loaded into a battery swapping frame containing the battery first, and then the battery swapping frame is locked and attached to the vehicle. Because of the introduction of the battery swapping frame, the required mounting space is made large, and the volume energy density of the battery is difficult to be improved in a case where a space of the vehicle bottom is limited.

With the battery 1 according to the embodiments of the present disclosure, the mounting structure 6 is disposed at the housing 5 of the battery 1 and is detachably connected to the vehicle-bottom longitudinal beam 200, so that the battery 1 can be mounted to the the vehicle-bottom longitudinal beam by using the mounting structure 6, to realize the mounting of the battery 1 to the vehicle 1000. Therefore, a battery swapping frame used for accommodating the battery in the related art is omitted, and a mounting space proportion of the battery swapping frame is reduced. Further, the volume energy density of the battery 1 can be increased. Moreover, since the battery swapping frame is omitted, the cost can be reduced, a load of the whole vehicle can be reduced, and battery swapping efficiency can be improved. Moreover, design requirements of a matched battery-swapping transport vehicle for battery swapping for volume and load-bearing of the battery are lowered, making the design of the battery-swapping transport vehicle less difficult and less costly.

Moreover, because the battery in the related art is mounted by using the battery swapping frame, in order to ensure an energy density of the battery, a height of the battery swapping frame above the ground is low. When the ground has a protrusion, the battery swapping frame is easily bumped, resulting in damage to the battery. For the battery 1 according to the embodiments of the present disclosure, since the battery swapping frame is omitted, a height of a lower part of the battery 1 above the ground is improved, which lowers the risk of hitting and injuring the battery 1 due to the protrusion on the ground, and improves use safety and a service life of the battery 1.

Moreover, since the battery swapping frame is omitted, a space of the battery 1 above the ground can be increased, which is beneficial to the battery swapping operation. In some cases, a battery swapping station 2000 does not need to be trenched, and the vehicle 1000 does not need to be lifted, so that battery swapping can be realized. In short, whole vehicle lifting or trench digging requirement can be cancelled, so that a site arrangement of the battery swapping station 2000 can be simplified, and a space utilization rate is increased.

In addition, in the related art, when the battery is mounted by using the battery swapping frame, a plurality of locking-attachment structures is arranged at a frame outer peripheral position of the battery swapping frame, i.e., the locking-attachment structure is located at a side of the battery away from the vehicle-bottom longitudinal beam and bears a great torque, and the mounting reliability of the battery is low. With the battery 1 according to the embodiments of the present disclosure, since the mounting structure 6 is detachably connected to the vehicle-bottom longitudinal beam 200, the mounting structure 6 may be disposed at a position of the housing 5 of the battery 1 close to the vehicle-bottom longitudinal beam 200, such that the mounting structure 6 is located between the housing 5 of the battery 1 and the vehicle-bottom longitudinal beam 200, i.e., the mounting structure 6 is located at a side of the battery 1 close to the vehicle-bottom longitudinal beam 200, a torque borne by the mounting structure 6 is small, and mounting reliability of the battery 1 is high.

In addition, in the related art, since the locking-attachment structure is located at the side of the battery away from the vehicle-bottom longitudinal beam, and a distance between locking-attachment structures at two transverse sides of the vehicle-bottom longitudinal beam is large, it is difficult to ensure relative position precision of the plurality of locking-attachment structures. During battery replacement, since the relative position precision of the plurality of locking-attachment structures is low, the plurality of locking-attachment structures is difficult to quickly and accurately implement respective alignment, such that battery swapping difficulty is high, and the battery swapping efficiency is low. With the battery 1 according to the embodiments of the present disclosure, since the mounting structure 6 may be disposed at a position of the housing 5 of the battery 1 close to the vehicle-bottom longitudinal beam 200, when the mounting structure 6 on the battery 1 is arranged at the two transverse sides of the vehicle-bottom longitudinal beam 200, a distance between the mounting structures 6 at the two transverse sides of the vehicle-bottom longitudinal beam 200 is smaller, such that relative position precision of the mounting structures 6 at the two transverse sides of the vehicle-bottom longitudinal beam 200 can be easily improved, lowering processing difficulty. Moreover, during the replacement of the battery 1, since the relative position precision of the mounting structures 6 at the two sides is high, the mounting structures 6 at the two sides can easily implement respective alignment, thereby lowering the battery swapping difficulty and improving the battery swapping efficiency.

In the above embodiment, a docking structure 7 that may dock with the vehicle 1000 is disposed on the housing 5 to allow for current conduction or liquid conduction or simultaneously current conduction and liquid conduction. For example, when the docking structure 7 implements current conduction, current transmission between the vehicle 1000 and the battery 1 can be implemented, to implement power supply for the vehicle 1000 by the battery 1, control of the vehicle 1000 to the battery 1, and the like. For example, when the docking structure 7 implements liquid conduction, heat transfer between a refrigerating medium system of the vehicle 1000 and the battery 1 may be implemented, to adjust a temperature of the battery 1 by using the refrigerating medium system, to improve operation reliability and safety of the battery 1, or waste heat of the battery 1 is absorbed by using the refrigerating medium system to satisfy a heat source requirement of a heat-pump air-conditioning system of the vehicle 1000, and details are omitted herein.

In some embodiments, as shown in FIG. 2, FIG. 3, and FIG. 6, the housing 5 has a docking structure 7 defined thereon, and the docking structure 7 is located at other surfaces of the housing 5 other than a bottom wall 50a and an outer peripheral wall 50b of the housing 5.

Specifically, when the battery 1 is mounted in the vehicle 1000 for use, a bottom surface of the housing 5 is the bottom wall 50a of the housing 5, a top surface of the housing 5 is a top wall 50c of the housing 5, and a surface of the housing 5 that is connected between the top wall 50c of the housing 5 and the bottom wall 50a of the housing 5 and far away from the vehicle-bottom longitudinal beam 200 is an outer peripheral wall 50b of the housing 5.

The bottom wall 50a of the housing 5 may be, but is not limited to, a planar structure that is horizontally arranged; the top wall 50c of the housing 5 may be, but is not limited to, a planar structure that is horizontally arranged, for example, may also be a middle recessed structure shown in the drawings; and the outer peripheral wall 50b of the housing 5 may be, but is not limited to, formed by a plurality of vertically arranged planar structures being enclosed in a horizontal direction.

In this embodiment, the docking structure 7 is neither disposed at the bottom wall 50a of the housing 5, nor at the outer peripheral wall 50b of the housing 5.

Therefore, since the docking structure 7 is not provided at the bottom wall 50a of the housing 5, it can be voided that a space below the housing 5 is occupied by the docking structure 7, which ensures that a ground height below the battery 1 is sufficient, thereby lowering the risk of hitting and damaging the docking structure 7 because of the protrusion of the ground, and improving safety of the docking structure 7. Moreover, it is beneficial to the battery swapping operation, so that battery swapping can be realized without the need for digging a trench at the battery swapping station 2000 and lifting the vehicle 1000.

Moreover, since the docking structure 7 is not disposed at the outer peripheral wall 50b of the housing 5, it can be voided that a space outside an outer contour of the housing 5 is occupied by the docking structure 7, which is beneficial to an improvement in the energy density of the battery 1. Moreover, since the docking structure 7 is not disposed at the outer peripheral wall, the docking structure 7 is not easily bumped and damaged by an external object, improving the safety of the docking structure 7.

In addition, since the docking structure 7 is neither disposed at the bottom wall 50a of the housing 5 nor at the outer peripheral wall 50b of the housing 5, during operation of the vehicle 1000, the docking structure 7 is not easy to be touched by splashed muddy water and the like, such that corrosion on the docking structure 7 by muddy water and failure of the docking structure 7 can be avoided, thereby avoiding problems such as docking failure, and improving operation reliability of the docking structure 7.

For example, in some specific embodiments, as shown in FIG. 4 to FIG. 7, the housing 5 has a recess 10 defined at a top of the housing 5. The recess 10 is adapted to accommodate the vehicle-bottom longitudinal beam 200, and the docking structure 7 is located in the recess 10.

Therefore, a space in the recess 10 can be utilized for providing the docking structure 7. In this way, on the one hand, the docking structure 7 can obtain protection from the recess 10, such that the docking structure 7 can be prevented from being bumped and damaged and prevented from being corroded by splashed muddy water during the operation of the vehicle 10000. On the other hand, the docking structure 7 can be prevented from occupying a space at an outer side of the battery 1, which is further beneficial to the improvement of the energy density of the battery 1. Moreover, it is beneficial to the battery swapping operation, so that battery swapping can be realized without the need for digging a trench at the battery swapping station 2000 and lifting the vehicle 1000.

For example, in some specific examples, as shown in FIG. 4 and FIG. 5, the vehicle-bottom longitudinal beam 200 may include two longitudinal beams 201 arranged in parallel. The two longitudinal beams 201 are each extended into the recess 10, and the docking structure 7 may be extended into a space between the two longitudinal beams 201. In this way, the docking structure 7 can be prevented from occupying other spaces more effectively, and the energy density of the battery 1 can be further improved by using the saved space. Moreover, it is beneficial to the battery swapping operation, so that battery swapping can be realized without the need for digging a trench at the battery swapping station 2000 and lifting the vehicle 1000.

It should be noted that "the recess 10 being adapted to accommodate the vehicle-bottom longitudinal beam 200" means that the vehicle-bottom longitudinal beam 200 is at least partially extended into the recess 10 but is not completely located in the recess 10. More specifically, it can be that a segment of the vehicle-bottom longitudinal beam 200 in the longitudinal direction is extended into the recess 10, and it can further be that the segment is partially or completely extended into the recess 10 in the vertical direction.

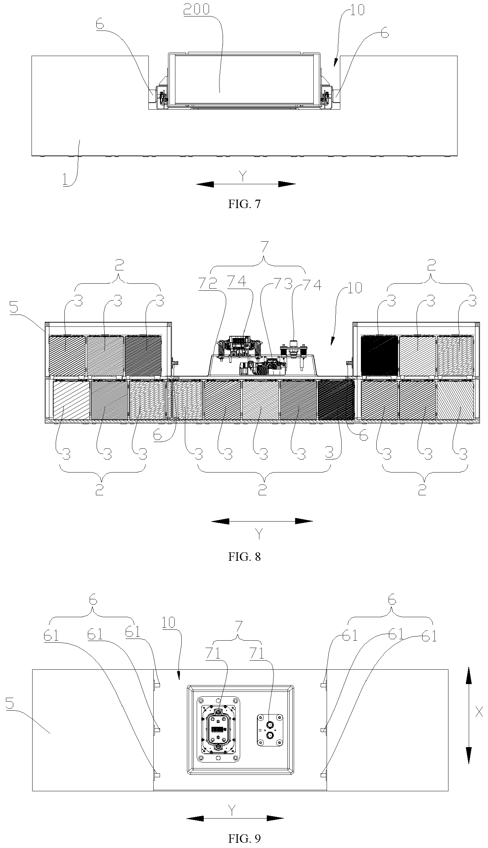

It should be noted that a battery cell 4 may be disposed in a space directly below the recess 10 in the housing 5 (like as shown in FIG. 8), or no battery cell 4 may be disposed in a space directly below the recess 10 in the housing 5. For example, when the battery cell 4 is provided, the energy density of the battery 1 can be improved; and when no battery cell 4 is provided, the height of the battery 1 above the ground can be increased, to form protection for the battery 1, and the space is utilized for providing other structural components.

In this embodiment, as shown in FIG. 7 and FIG. 8, since the recess 10 is defined at the top of the housing 5 and adapted to accommodate the vehicle-bottom longitudinal beam 200, spaces at the two transverse sides of the vehicle-bottom longitudinal beam 200 can be utilized more effectively for providing battery cells 4, to improve the energy density of the battery 1, or the battery cells 4 originally required to be arranged at a bottom layer of the battery 1 can be transferred to the two transverse sides of the vehicle-bottom longitudinal beam 200, which can further improve the height of the battery 1 above the ground and ensure a sufficient space reserved between a bottom of the battery 1 and the ground for the battery swapping operation. Moreover, because of an improvement in the height of the battery 1 above the ground, risks of hitting and scratching the bottom of the battery 1 due to the protrusions of the ground and the like can be reduced, and the use safety and the service life of the battery 1 are improved. Therefore, by providing the recess 10 at the top of the housing 5, a problem of low space utilization rate can be effectively solved, which is beneficial to an improvement in the safety and reliability of the battery 1 and to a battery swapping design.

It should be noted that, as shown in FIG. 6 to FIG. 8, an arrangement position of the docking structure 7 in the recess 10 is not limited. For example, in some optional examples, the docking structure 7 may be located at a bottom wall 10a of the recess 10. For another example, in some other optional examples, the docking structure 7 may also be located at a side wall 10b of the recess 10. Therefore, the docking structure 7 can be protected, and other spaces are prevented from being occupied by the docking structure 7, so that the arrangement position of the docking structure 7 is flexible. Specifically, when the battery 1 is mounted in the vehicle 1000 for use, a bottom surface of the vehicle-bottom longitudinal beam 200 faces towards the bottom wall 10a of the recess 10, and an outer side surface of the vehicle-bottom longitudinal beam 200 faces towards the side wall 10b of the recess 10.

When the docking structure 7 is located on the bottom wall 10a of the recess 10, in some cases, the docking structure 7 may be extended into two longitudinal beams 201 of the vehicle-bottom longitudinal beam 200, which can prevent the docking structure 7 from occupying other spaces, to improve the energy density of the battery 1 by using the saved space. Moreover, the docking structure 7 can be prevented from being bumped and damaged and prevented from being corroded by the splashed muddy water, thereby improving the safety and reliability of the battery 1.

When the docking structure 7 is located on the side wall 10b of the recess 10, a space between the two longitudinal beams 201 of the vehicle-bottom longitudinal beam 200 can be utilized for accommodating at least part of some battery cells 4 of the battery 1, thereby improving the energy density of the battery 1. In addition, when the mounting structure 6 and the docking structure 7 are each disposed at the side wall 10b of the recess 10, a distance between the mounting structure 6 and the docking structure 7 can be brought closer, which easily improves relative position precision of the mounting structure 6 and the docking structure 7. When the mounting structure 6 is docked in place, the docking structure 7 can be easily and accurately aligned to realize the docking, which lowers the battery swapping difficulty, increases the battery swapping efficiency, and lowers processing difficulty of the battery 1.

In some embodiments, the docking structure 7 is disposed at a top wall 50c of the housing 5.

Specifically, when the battery 1 is mounted in the vehicle 1000 for use, an upward wall surface of the housing 5 is a top wall. For example, when the top surface of the housing 5 is a plane, the top surface of the housing 5 is a top wall as a whole. At this time, the docking structure 7 may be disposed at any position of the top wall 50c of the housing 5. For another example, when the housing 5 has a recess 10 defined at the top of the housing 5, upward wall surfaces of the housing 5 that are located at two transverse sides outside the recess 10 are the top walls, and the bottom wall 10a of the recess 10 is also the top wall. At this time, the docking structure 7 may be disposed at the bottom wall in the recess 10 or at the top wall outside the recess 10.

Therefore, on the one hand, the arrangement position of the docking structure 7 is high, which can better prevent the docking structure 7 from being bumped and damaged and from being corroded by the splashed muddy water, thereby improving the safety and reliability of the battery 1. On the other hand, a docking direction of the docking structure 7 disposed at the top wall 50c may be set to face upwards. In this way, when the battery 1 is mounted upwards, the docking structure 7 may be docked in place upwards. When the battery 1 is disassembled, the battery 1 is pulled downwards, and the docking structure 7 may be disengaged from its docking downwards, thereby simplifying the battery swapping operation of the battery 1, and improving the battery swapping efficiency of the battery 1.

In addition, it should be noted that when the docking structure 7 is disposed at the top wall 50c of the housing 5, the docking structure 7 is not limited to dock upwards, i.e., it is not limited that a docking surface of the docking structure 7 faces upwards to allow for docking in a vertical direction. For example, in other embodiments, the docking surface of the docking structure 7 may also face horizontally to allow for docking in a horizontal direction. Therefore, when the battery 1 is mounted, the battery 1 may be lifted first, and then be pushed horizontally (for example, be pushed horizontally forwards or backwards), to complete docking to satisfy different design requirements.

In addition, it should be noted that when the docking structure 7 is docked upwards, i.e., when the docking surface of the docking structure 7 faces upwards to allow for docking in the vertical direction, it is not limited that the docking structure 7 is disposed at the top wall 50c of the housing 5. For example, the docking structure 7 may also be disposed at other positions of the housing 5. For example, the docking structure 7 may be disposed at the outer peripheral wall 50b of the housing 5, to implement flexible design. In short, no matter where the docking structure 7 is disposed in the housing 5, as long as the docking surface of the docking structure 7 faces upwards to allow for docking in the vertical direction, when the battery 1 is mounted, the battery 1 can be lifted upwards, and the docking structure 7 can be docked upwards in place. When the battery 1 is disassembled, the battery 1 is pulled downwards, and the docking structure 7 can be disengaged from its docking downwards. In this way, the battery swapping operation of the battery 1 is simplified, and the battery swapping efficiency of the battery 1 is improved. In addition, a movement space required for docking in this manner is small, which can save space occupied by docking, and is beneficial to the improvement of the energy density of the battery 1.

In addition, when the docking surface of the docking structure 7 faces horizontally to allow for docking in the horizontal direction, it is not limited that the docking structure 7 is disposed on the top wall 50c of the housing 5. For example, the docking structure 7 may also be disposed at other positions of the housing 5. For example, the docking structure 7 may be disposed at the outer peripheral wall 50b of the housing 5, to implement flexible design. In conclusion, no matter where the docking structure 7 is disposed in the housing 5, as long as the docking surface of the docking structure 7 faces horizontally to allow for docking in the horizontal direction, when the battery 1 is mounted, the battery 1 may be lifted first, and then be pushed horizontally (for example, be pushed horizontally forwards or backwards), to complete docking to satisfy different design requirements. For example, connection direction requirements of different mounting structures 6 are satisfied.

In some embodiments, as shown in FIG. 6, the docking structure 7 is located at a transverse center position of a top of the housing 5. Therefore, by transversely centering the docking structure 7, a connection of the battery cell 4 or a temperature adjustment plate 8 in the housing 5 with the docking structure 7 is facilitated, which simplifies a connection path of the docking structure 7 and saves a space required by the connection path, so that more battery cells 4 or battery cells 4 with greater volumes can be arranged in the housing 5, thereby improving the energy density of the battery 1. In addition, by transversely centering the docking structure 7, it is beneficial that a center of gravity of the battery 1 in the transverse direction is centered, so that stress distribution of each of the mounting structures 6 on the battery 1 is uniform, which improves the problems of stress concentration of the mounting structures 6 and the like, and improves connection reliability and stability of the battery 1 and the vehicle-bottom longitudinal beam 200.

In some embodiments, as shown in FIG. 9, the docking structure 7 is located at a longitudinal center position of a top of the housing 5. Therefore, by longitudinally centering the docking structure 7, the connection of the battery cell 4 or the temperature adjustment plate 8 in the housing 5 with the docking structure 7 is facilitated, which simplifies the connection path of the docking structure 7 and saves the space required by the connection path, so that more battery cells 4 or battery cells 4 with greater volumes can be arranged in the housing 5, thereby improving the energy density of the battery 1. In addition, by longitudinally centering the docking structure 7, it is beneficial that the center of gravity of the battery 1 in the longitudinal direction is centered, so that the stress distribution of each of the mounting structures 6 on the battery 1 is uniform, which improves the problems of the stress concentration of the mounting structures 6 and the like, and improves the connection reliability and stability of the battery 1 and the vehicle-bottom longitudinal beam 200.

In some embodiments, as shown in FIG. 9, the docking structure 7 includes a plurality of sub-docking portions 71. The plurality of sub-docking portions 71 have different docking functions. For example, with reference to FIG. 2, the plurality of sub-docking portions 71 may include at least one of a first sub-docking portion 71a and the second sub-docking portion 71b. The first sub-docking portion 71a docks with the vehicle 1000 to allow for current conduction, and the second sub-docking portion 71b docks with the vehicle 1000 to allow for liquid conduction, thereby enriching docking function requirements of the battery 1 and the vehicle 1000. For example, with reference to FIG. 8, each sub-docking portion 71 corresponds to at least one docking header 74, and the sub-docking portion 71 may dock with the vehicle 1000 through the docking header 74.

When the temperature adjustment plate 8 is provided in the housing 5 of the battery 1, the temperature adjustment plate 8 is configured to adjust the temperature of the battery cell 4. When a liquid path is defined in the temperature adjustment plate 8, the second sub-docking portion 71b may be in communication with the liquid path and docks with the vehicle 1000 to be in communication with the refrigerating medium system of the vehicle 1000, to adjust the temperature of the battery 1 by using the refrigerating medium system.

Optionally, the plurality of sub-docking portions 71 has the same docking direction. Therefore, the battery 1 is moved in one direction same as the docking direction, i.e., synchronous docking of the plurality of sub-docking portions 71 can be completed, thereby simplifying a docking operation and improving docking efficiency. Moreover, the docking structure 7 designed in this way is simple in structure and easy to process. For example, docking surfaces of the first sub-docking portion 71a and the second sub-docking portion 71b each face upwards to allow for docking in the vertical direction. For another example, the docking surfaces of the first sub-docking portion 71a and the second sub-docking portion 71b each face horizontally to allow for docking in the horizontal direction.

In some embodiments, the plurality of sub-docking portions 71 are arranged at intervals in a transverse direction and/or a longitudinal direction of the housing 5. For example, the plurality of sub-docking portions 71 may be arranged at intervals in the transverse direction of the housing 5, but have almost the same position in the longitudinal direction. For another example, the plurality of sub-docking portions 71 may be arranged at intervals in the longitudinal direction of the housing 5, but have almost the same position in the transverse direction. For another example, the plurality of sub-docking portions 71 may be arranged at intervals in the transverse direction of the housing 5 and may also be arranged at intervals in the longitudinal direction of the housing 5.

Therefore, since the plurality of sub-docking portions 71 are arranged at intervals, it can be ensured that the sub-docking portions 71 do not interfere with each other during docking and can be smoothly docked. Moreover, by arranging the plurality of sub-docking portions 71 to be arranged at intervals in the transverse direction and/or the longitudinal direction of the housing 5, it is beneficial to satisfy that the plurality of sub-docking portions 71 has the same docking direction. For example, whether the plurality of sub-docking portions 71 simultaneously dock upwards or simultaneously dock in the horizontal direction, it can be better satisfied that the plurality of sub-docking portions 71 has the same docking direction. In addition, since the plurality of sub-docking portions 71 are arranged at intervals in the transverse direction and/or the longitudinal direction of the housing 5, the plurality of sub-docking portions 71 may not need to be arranged at intervals in the vertical direction while satisfying the requirements for interval arrangement, thereby saving space occupation of the plurality of sub-docking portions 71 in the vertical direction, and facilitating ensuring a height of the bottom of the battery 1 above the ground.

In some embodiments, the docking structure 7 and the mounting structure 6 are located on a surface of the housing 5 at one side of the housing 5, i.e., the docking structure 7 and the mounting structure 6 are disposed at an one wall surface of the housing 5. For example, the docking structure 7 and the mounting structure 6 are each disposed at the bottom wall 10a of the recess 10 or at the one side wall 10b of the recess 10.

Therefore, the docking structure 7 and the mounting structure 6 are located on the surface at one side, which facilitates processing, lowers manufacturing difficulty, reduces tolerance. Moreover, a distance between the docking structure 7 and the mounting structure 6 is made close, so that the relative position precision of the mounting structure 6 and the docking structure 7 is easily improved. When the mounting structure 6 is docked in place, the docking structure 7 can also be easily and accurately aligned for docking, which lowers the battery swapping difficulty, improves the battery swapping efficiency, and lowers the processing difficulty of the battery 1.

In some embodiments, as shown in FIG. 6, the docking structure 7 and the mounting structure 6 are located on surfaces of the housing 5 at different sides of the housing 5, i.e., the docking structure 7 and the mounting structure 6 are disposed at different wall surfaces of the housing 5. For example, one of the docking structure 7 and the mounting structure 6 is disposed at the bottom wall 10a of the recess 10, and the other one of the docking structure 7 and the mounting structure 6 is disposed at the side wall 10b of the recess 10.

Therefore, the docking structure 7 and the mounting structure 6 can be arranged at different spatial positions of the housing 5 to avoid mutual interference, and a larger number of docking structures 7 or mounting structures 6 can be arranged, so that the docking structure 7 can flexibly select an arrangement position as its requirements, and the mounting structure 6 may also flexibly select an arrangement position as its requirements, thereby ensuring respective functional requirements of the docking structure 7 and the mounting structure 6.

In some embodiments, a position of the docking structure 7 is adjustable relative to the housing 5. Therefore, by adjusting the position of the docking structure 7, for different docking positions of the vehicle-bottom longitudinal beam 200 or different vehicle-bottom longitudinal beams 200, docking can be performed, with high universality and wide application range.

It should be noted that a solution where a position of the docking structure 7 is adjustable relative to the housing 5 is not limited. For example, the housing 5 has a plurality of first mounting positions, and the docking structure 7 may be selectively mounted to any one of the first mounting positions. For another example, the housing 5 is provided with a first adjustment mechanism, and the docking structure 7 is mounted on the first adjustment mechanism. The position of the docking structure 7 may be movably adjusted when driven by the first adjustment mechanism.

In some embodiments, as shown in FIG. 5, FIG. 6, and FIG. 9, the mounting structures 6 at the housing 5 are transversely spaced apart from each other to be respectively disposed at two transverse sides of the vehicle-bottom longitudinal beam 200, i.e., the mounting structure 6 is arranged at a position on the housing 5 corresponding to a transverse side of the vehicle-bottom longitudinal beam 200, to be connected to one transverse side of the vehicle-bottom longitudinal beam 200, and the mounting structure 6 is also arranged at a position on the housing 5 corresponding to another transverse side of the vehicle-bottom longitudinal beam 200, to be connected to the other transverse side of the vehicle-bottom longitudinal beam 200. Therefore, the battery 1 can be respectively connected to the two transverse sides of the vehicle-bottom longitudinal beam 200, so that mounting stability and reliability of the battery 1 can be improved.

For example, in some optional examples, as shown in FIG. 5, FIG. 6, and FIG. 9, the mounting structures 6 at the two transverse sides of the vehicle-bottom longitudinal beam 200 may be symmetrically arranged, i.e., the mounting structure 6 located at the one transverse side of the vehicle-bottom longitudinal beam 200 on the housing 5 and the mounting structure 6 located at the other transverse side of the vehicle-bottom longitudinal beam 200 are symmetrically arranged. Therefore, design and processing are facilitated. Moreover, it is beneficial to an enhancement in uniformity of stress distribution, settlement of a problem of stress concentration of the mounting structure 6, an improvement in connection reliability of each mounting structure 6, and a further enhancement in mounting stability and reliability of the battery 1.

Certainly, the present disclosure is not limited thereto. For example, in some other optional examples, the mounting structures at the two transverse sides of the vehicle-bottom longitudinal beam 200 are offset from each other in a longitudinal direction, i.e., the mounting structure 6 located at the one transverse side of the vehicle-bottom longitudinal beam 200 on the housing 5 and the mounting structure 6 located at the other transverse side of the vehicle-bottom longitudinal beam 200 on the housing 5 are offset from each other and asymmetrically arranged. Therefore, it is beneficial to allow for full dispersion of the mounting structures 6, the enhancement of the uniformity of the stress distribution, the settlement of the problem of stress concentration of the mounting structure 6, and the further enhancement of the mounting stability and reliability of the battery 1.

In some embodiments, as shown in FIG. 7 to FIG. 9, the housing 5 has a recess 10 defined at a top of the housing 5. The recess 10 is adapted to accommodate the vehicle-bottom longitudinal beam 200, and the mounting structure 6 is located in the recess 10.

Therefore, by arranging the mounting structure 6 in the recess 10, the mounting structure 6 can be simply and effectively ensured to be located between the housing 5 and the vehicle-bottom longitudinal beam 200, which is beneficial to the connection between the mounting structure 6 and the vehicle-bottom longitudinal beam 200. Moreover, the mounting structure 6 is arranged in the space inside the recess 10, so that the mounting structure 6 can be protected by the recess 10, which prevents the mounting structure 6 from being bumped and damaged, and improves the mounting reliability of the battery 1. Moreover, during the operation of the vehicle 1000, the occurrence of the problem that the mounting structure 6 cannot be detached and replaced and the like, which are caused by the corrosion on the mounting structure 6 by splashed muddy water, can be prevented.

It should be noted that "the recess 10 being adapted to accommodate the vehicle-bottom longitudinal beam 200" means that the vehicle-bottom longitudinal beam 200 is at least partially extended into the recess 10 but is not completely located in the recess 10. More specifically, it can be that a segment of the vehicle-bottom longitudinal beam 200 in the longitudinal direction is extended into the recess 10, and it can further be that the segment is partially or completely extended into the recess 10 in the vertical direction.

In this embodiment, since the housing 5 has the recess 10 defined at the top of the housing 5 and the recess 10 is adapted to accommodate the vehicle-bottom longitudinal beam 200, the spaces at the two transverse sides of the vehicle-bottom longitudinal beam 200 can be more effectively utilized for providing battery cells 4, to improve the energy density of the battery 1, or the battery cells 4 originally required to be arranged at the bottom layer of the battery 1 can be transferred to the two transverse sides of the vehicle-bottom longitudinal beam 200, which can further improve the height of the battery 1 above the ground and ensure a sufficient space reserved between the bottom of the battery 1 and the ground for the battery swapping operation. Moreover, because of the improvement of the height of the battery 1 above the ground, the risks of hitting and scratching the bottom of the battery 1 due to the protrusions of the ground and the like can be reduced, and the use safety and the service life of the battery 1 are improved. Therefore, by providing the recess 10 at the top of the housing 5, the problem of low space utilization rate can be effectively solved, which is beneficial to the improvement of the energy density of the battery 1 and the space of the battery 1 above the ground. In this way, the battery swapping can be realized without the need for digging a trench at the battery swapping station 2000 and lifting the vehicle 1000, which is beneficial to the battery swapping design.

It should be noted that a position of the mounting structure 6 in the recess 10 is not limited. For example, in some optional examples, as shown in FIG. 6, the mounting structure 6 is located on at least one of two transverse side walls 10b of the recess 10, i.e., the mounting structure 6 may be disposed at one side wall 10b of the recess 10, or the mounting structure 6 may be disposed at each of the two side walls 10b of the recess 10. Specifically, when the battery 1 is mounted in the vehicle 1000 for use, the bottom surface of the vehicle-bottom longitudinal beam 200 faces towards the bottom wall 10a of the recess 10, and the outer side surface of the vehicle-bottom longitudinal beam 200 faces towards the side wall 10b of the recess 10.

Therefore, compared with disposing the mounting structure 6 at the bottom wall 10a of the recess 10, by disposing the mounting structure 6 at the side wall 10b of the recess 10, the mounting structure 6 can be prevented from occupying a space in a height direction, thereby improving the height of the battery 1 above the ground and ensure a sufficient space reserved between the bottom of the battery 1 and the ground for the battery swapping operation. In this way, the battery swapping station 2000 does not need to be trenched, and the vehicle 1000 does not need to be lifted. Moreover, because of the improvement of the height of the battery 1 above the ground, the risks of hitting and scratching the bottom of the battery 1 due to the protrusions of the ground and the like can be reduced, and the use safety and the service life of the battery 1 are improved.

In addition, since the mounting structure 6 is disposed at the side wall 10b of the recess 10, a force borne by the battery 1 at the mounting structure 6 may be close to a shear stress. When the mounting structure 6 is disposed at the bottom wall 10a of the recess 10, the force borne by the battery 1 at the mounting structure 6 is substantially a tensile stress. Therefore, when the mounting structure 6 is disposed at the side wall 10b of the recess 10, the mounting reliability of the battery 1 can be improved.

In some embodiments, as shown in FIG. 9, the mounting structure 6 includes a plurality of sub-mounting portions 61 disposed at one side wall 10b of the recess 10. For example, the recess 10 has a plurality of sub-mounting portions 61 provided at a side wall 10b at one transverse side of the recess 10; for another example, the recess 10 has a plurality of sub-mounting portions 61 provided at the side wall 10b at the one transverse side of the recess 10 and also has a plurality of sub-mounting portions 61 provided at a side wall 10b on another one transverse side of the recess 10.

Therefore, it is beneficial to an enhancement in dispersibility and uniformity of stress distribution, settlement of a problem of stress concentration of the sub-mounting portion 61, an improvement in connection reliability of each sub-mounting portion 61, and a further enhancement in the mounting stability and reliability of the battery 1.

In some examples, when the mounting structure 6 are respectively arranged at the two transverse sides of the vehicle-bottom longitudinal beam 200, and when the mounting structures 6 at the two transverse sides are symmetrically arranged, the plurality of sub-mounting portions 61 at the side wall 10b at the one transverse side of the recess 10 and the plurality of sub-mounting portions 61 at the side wall 10b at the other one transverse side of the recess 10 are directly opposite to each other in a one-to-one correspondence in the transverse direction.

In some examples, when the mounting structures 6 are respectively arranged at the two transverse sides of the vehicle-bottom longitudinal beam 200, and when the mounting structures 6 at the two transverse sides are offset from each other in the longitudinal direction, the plurality of sub-mounting portions 61 at the side wall 10b at the one transverse side of the recess 10 and the plurality of sub-mounting portions 61 at the side wall 10b at the other one transverse side of the recess 10 are offset from each other one by one in the longitudinal direction, i.e., any one sub-mounting portion 61 at the one transverse side of the recess 10 is opposite to a position between two adjacent sub-mounting portions 61 at the other one transverse side of the recess 10 in the transverse direction.

In some embodiments, a number of the sub-mounting portions 61 included in the mounting structure 6 is N, i.e., a number of the sub-mounting portions 61 at one side wall 10b of the recess 10 is N, or a number of sub-mounting portions 61 located at a single transverse side of the vehicle-bottom longitudinal beam 200 on the battery 1 is N.

Optionally, N may be two or three. Therefore, since the number of the sub-mounting portions 61 is small, relative position precision of the plurality of sub-mounting portions 61 is easy to be controlled, alignment mounting of each sub-mounting portion 61 and the vehicle-bottom longitudinal beam 200 is easily achieved, mounting difficulty is lowered, and the mounting efficiency is improved.

It should be noted that the number N may also be set by referring to a longitudinal dimension L1 of the battery 1, i.e., when the longitudinal dimension L1 of the battery 1 is large, the number N may be set to be more, and when the longitudinal dimension L1 of the battery 1 is small, the number N may be set to be less. Therefore, it can be ensured that the number of the sub-mounting portions 61 is sufficient and not too many. On the one hand, the connection reliability of the battery 1 can be ensured. On the other hand, the relative position precision of the plurality of sub-mounting portions 61 can be ensured, which is beneficial to a decrease in the processing difficulty and easy to assemble.

Optionally, the plurality of sub-mounting portions 61 on the one side wall 10b of the recess 10 are arranged at intervals in the longitudinal direction. Therefore, there is a sufficient space in the longitudinal direction to ensure a spacing between the adjacent sub-mounting portions 61. Moreover, when the battery 1 is lifted upwards vertically to allow the plurality of sub-mounting portions 61 to be connected to the vehicle-bottom longitudinal beam 200, the plurality of sub-mounting portions 61 arranged at intervals in the longitudinal direction do not interfere with each other, so that a flexible and diverse design of a structure of the sub-mounting portion 61 can be realized. In addition, the plurality of sub-mounting portions 61 arranged at intervals in the longitudinal direction can enable the battery 1 to disperse its stress along a plurality of positions in the longitudinal direction, to reduce the stress borne by each sub-mounting portion 61, and improve the connection reliability of the battery 1.

Optionally, a longitudinal dimension L1 of the battery 1 is smaller than a transverse dimension L2 of the battery 1, i.e., the transverse dimension L2 of the battery 1 is large, and the longitudinal dimension L1 of the battery 1 is small. When the transverse dimension L2 of the battery 1 cannot exceed a transverse width of the vehicle 1000, the longitudinal dimension L1 of the battery 1 can be ensured not to be too large, and a dimension of the battery 1 is small. In this way, when two or three sub-mounting portions 61 at the one side wall are provided and arranged at intervals in the longitudinal direction of the housing 5, the stress of each sub-mounting portion 61 can be better reduced, thereby ensuring the mounting reliability of the battery 1. Moreover, since the dimension of the single battery 1 is small, deformation of the battery 1 can be reduced, which is beneficial to an improvement in an assembly success rate of the battery 1.

In some embodiments, as shown in FIG. 6, the mounting structure 6 is located at a position of a side wall 10b of the recess 10 close to a bottom wall 10a of the recess 10. Therefore, it is beneficial to allow the mounting structure 6 to be centered as much as possible in the vertical direction, so that a weight of the battery 1 can be better carried, and the mounting reliability and stability of the battery 1 are improved.

In some embodiments, as shown in FIG. 6, the mounting structure 6 is located at a vertical center position of the housing 5. Therefore, since the mounting structure 6 is centered in the vertical direction, the weight of the battery 1 can be better carried, and the mounting reliability and stability of the battery 1 are improved.

In some embodiments, a position of the mounting structure 6 is adjustable relative to the housing 5. Therefore, by adjusting the position of the mounting structure 6, for different mounting positions of the vehicle-bottom longitudinal beam 200 or different vehicle-bottom longitudinal beams 200, mounting can be performed, with the high universality and the wide application range.

It should be noted that a solution where a position of the mounting structure 6 is adjustable relative to the housing 5 is not limited. For example, the housing 5 has a plurality of second mounting positions, and the mounting structure 6 may be selectively mounted to any one of the second mounting positions. For another example, the housing 5 is provided with a second adjustment mechanism, and the mounting structure 6 is mounted on the second adjustment mechanism. The position of the mounting structure 6 may be movably adjusted when driven by the second adjustment mechanism.

In some embodiments, as shown in FIG. 2, a longitudinal dimension L1 of the battery 1 is smaller than a transverse dimension L2 of the battery 1, indicating that the transverse dimension L2 of the battery 1 is large, while the longitudinal dimension L1 of the battery 1 is small. When the transverse dimension L2 of the battery 1 cannot exceed the transverse width of the vehicle 1000, the longitudinal dimension L1 of the battery 1 can be ensured not to be too large, and the dimension of the battery 1 is small. Therefore, it is beneficial to the improvement of the mounting reliability of the battery 1 and the mounting of the battery 1. For example, when two or three sub-mounting portions 61 at one side wall are provided and arranged at intervals in the longitudinal direction, the stress of each sub-mounting portion 61 can be better reduced, thereby ensuring the mounting reliability of the battery 1. Moreover, since the dimension of the single battery 1 is small, the deformation of the battery 1 can be reduced, which is beneficial to the improvement of the assembly success rate of the battery 1.

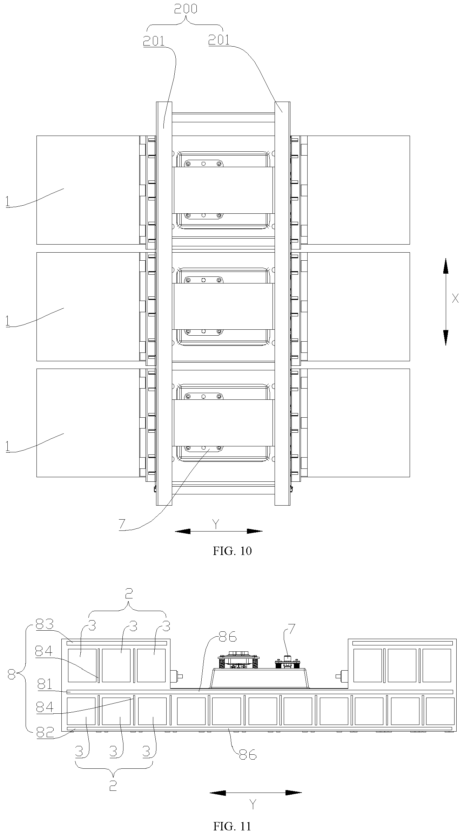

In addition, a plurality of batteries 1 (for example, as shown in FIG. 10) may be disposed at the bottom of the vehicle 1000, and the plurality of batteries 1 may be configured to be separately detachable relative to the vehicle 1000, so that a corresponding number of batteries 1 may be matched according to different application scenarios, different mileage, different configurations of the vehicle 1000, and the like, which improves a battery swapping flexibility. In this way, different vehicle models and application scenarios may be compatible. Moreover, since there is no need to match a single battery pack for a vehicle model, adaptability of the battery swapping station is improved, so that the number of battery swapping stations can be reduced, a distance between adjacent battery swapping stations is increased, and an input cost is lowered.

For example, a large heavy truck can use six batteries 1, while a tractor only needs to use three batteries 1, and a small truck only needs to use two batteries 1. Moreover, there is also a need to take into account the mileage requirement. For example, the tractor can run 300 kilometers to 500 kilometers with three batteries 1, but if the mileage requirement from 300 kilometers to 500 kilometers is not needed, then two batteries 1 or one battery 1 can be considered for use.

Moreover, there is no need to mount all batteries 1 to the vehicle 1000, reducing the load of the vehicle 1000. In addition, since each battery 1 can be separately disassembled and replaced, the battery 1 that has been deeply discharged can be disassembled and replaced, thereby avoiding the problem of power waste of the battery 1 caused by the replacement of the battery 1 without deep discharge.

In addition, compared with the solution of a whole large battery pack, when a plurality of batteries 1 with small dimensions are used in combination, since all batteries 1 need not to be replaced each time, the battery swapping efficiency is high, so that a throughput of the battery swapping station 2000 in the same space can be significantly improved.

In some embodiments, as shown in FIG. 3, the housing 5 includes a housing body 53 and a housing cover 54. The housing body 53 is an integrally-formed part and has an opening defined thereon. The housing cover 54 covers the opening. One of the mounting structure 6 and the docking structure 7 is disposed at the housing body 53, and the other one of the mounting structure 6 and the docking structure 7 is disposed at the housing cover 54. For example, the mounting structure 6 is disposed at the housing body 53, and the docking structure 7 is disposed at the housing cover 54. For another example, the mounting structure 6 is disposed at the housing cover 54, and the docking structure 7 is disposed at the housing body 53.

Therefore, during mounting, the battery cell 4 may be loaded into the housing body 53 from the opening, and then the housing cover 54 is used to cover the opening, thereby facilitating assembly of the battery 1. Moreover, since one of the mounting structure 6 and the docking structure 7 is disposed at the housing body 53, and the other one of the mounting structure 6 and the docking structure 7 is disposed at the housing cover 54, a relative position of the mounting structure 6 and the docking structure 7 can be flexibly designed.

In addition, it should be noted that although one of the mounting structure 6 and the docking structure 7 is disposed at the housing body 53, the other one of the mounting structure 6 and the docking structure 7 is disposed at the housing cover 54, based on a flexible structural design of the housing body 53 and the housing cover 54, it may be selected that the docking structure 7 and the mounting structure 6 are located on the surface of the housing 5 at one side of the housing 5, or that the docking structure 7 and the mounting structure 6 may be located on surfaces of the housing 5 at different sides of the housing 5.

For example, the side wall 10b of the recess 10 is defined by the housing body 53, and the bottom wall 10a of the recess 10 is defined by the housing cover 54. When the docking structure 7 is disposed at the bottom wall 10a of the recess 10, and when the mounting structure 6 is disposed at the side wall 10b of the recess 10, although the docking structure 7 is disposed at the housing cover 54, and the mounting structure 6 is disposed at the housing body 53, the docking structure 7 and the mounting structure 6 are located on surfaces of the housing 5 at different sides of the housing 5.

Of course, the present disclosure is not limited thereto. For example, in some other embodiments, the housing 5 includes a housing body 53 and a housing cover 54. The housing body 53 is an integrally-formed part and has an opening defined thereon. The housing cover 54 covers the opening. The mounting structure 6 and the docking structure 7 are each disposed at the housing body 53 or at the housing cover 54. For example, the mounting structure 6 and the docking structure 7 are each disposed at the housing body 53. For another example, the mounting structure 6 and the docking structure 7 are each disposed at the housing cover 54.

Therefore, during mounting, the battery cell 4 may be loaded into the housing body 53 from the opening, and then the housing cover 54 is used to cover the opening, thereby facilitating the assembly of the battery 1. Moreover, the mounting structure 6 and the docking structure 7 are each disposed at the housing body 53 or at the housing cover 54, so that a relative position tolerance between the mounting structure 6 and the docking structure 7 can be small, and the relative position precision of the mounting structure 6 and the docking structure 7 can be easily improved. When the mounting structure 6 is docked in place, the docking structure 7 can also be easily and accurately aligned for docking, thereby lowering the battery swapping difficulty, improving the battery swapping efficiency, and lowering the processing difficulty of the battery 1.

In addition, it should be noted that although the mounting structure 6 and the docking structure 7 are each disposed at the housing body 53 or at the housing cover 54, based on the flexible structural design of the housing body 53 and the housing cover 54, it may be selected that the docking structure 7 and the mounting structure 6 are located on a surface of the housing 5 at one side of the housing 5, or that the docking structure 7 and the mounting structure 6 are located on surfaces of the housing 5 at different sides of the housing 5.

For example, the side wall 10b and the bottom wall 10a of the recess 10 are each defined by the housing cover 54. When the docking structure 7 is disposed at the bottom wall 10a of the recess 10, and the mounting structure 6 is disposed at the side wall 10b of the recess 10, although the docking structure 7 and the mounting structure 6 are each disposed at the housing cover 54, the docking structure 7 and the mounting structure 6 are located on surfaces of the housing 5 at different sides of the housing 5.

It should be noted that a structural shape of the housing body 53 is not limited, and may be specifically designed according to a shape of the battery 1. A number of openings and a position of opening on the housing body 53 are not limited, and may be designed according to actual situations. For example, the opening may be disposed at a longitudinal side, a vertical top side, a vertical bottom side, or a transverse side of the housing body 53. A shape and a number of the housing cover 54 are also not limited and may be designed in a matched manner according to the opening. One opening may be correspondingly provided with at least one housing cover 54. For example, in some embodiments of the present disclosure, the housing body 53 has an opening defined at the top of the housing body 53, and the housing cover 54 is an integrally-formed part, or a plurality of housing covers 54 is provided and covers the opening at the top of the housing body 53. Therefore, the design is simple.

In some embodiments, as shown in FIG. 3, FIG. 6, and FIG. 8, the housing 5 may include a first housing portion 51 and two second housing portions 52 located at two transverse sides of the first housing portion 51. The first housing portion 51 may have a battery cell 4 provided therein, and the second housing portion 52 may have a battery cell 4 provided therein. The second housing portion 52 may also have no battery cell 4 provided therein. A top wall of each second housing portion 52 is higher than a top wall of the first housing portion 51. The recess 10 according to any one of the above embodiments may be defined between the top wall of the first housing portion 51 and side walls of the two second housing portions 52. With reference to FIG. 4 and FIG. 5, two longitudinal sides of the recess 10 are open, and the vehicle-bottom longitudinal beam 200 is adapted to pass through the recess 10 in the longitudinal direction.

Therefore, since the recess 10 is defined at the top of the housing 5 and adapted to accommodate the vehicle-bottom longitudinal beam 200, the spaces at the two transverse sides of the vehicle-bottom longitudinal beam 200 can be utilized more effectively for providing battery cells 4, to improve the energy density of the battery 1, or the battery cells 4 originally required to be arranged at the bottom layer of the battery 1 can be transferred to the two transverse sides of the vehicle-bottom longitudinal beam 200, which can further improve the height of the battery 1 above the ground and ensure a sufficient space reserved between the bottom of the battery 1 and the ground for the battery swapping operation. Moreover, because of the improvement of the height of the battery 1 above the ground, the risks of hitting and scratching the bottom of the battery 1 due to the protrusions of the ground and the like can be lowered, and the use safety and the service life of the battery 1 are improved. Therefore, by defining the recess 10 at the top of the housing 5, the problem of low space utilization rate can be effectively solved, which is beneficial to the improvement of the safety and reliability of the battery 1 and to the battery swapping design.

In some embodiments, as shown in FIG. 3 and FIG. 6, the battery module 3 includes one battery cell 4 or a plurality of battery cells 4. The plurality of battery modules 3 are arranged in parallel to form one battery layer 2. The first housing portion 51 has one battery layer 2 or a plurality of battery layers 2 arranged in the vertical direction, and the second housing portion 52 has one battery layer 2 or a plurality of battery layers 2 arranged in the vertical direction.

In the above embodiment, the plurality of battery modules 3 are arranged regularly with equal height in the horizontal direction to form the battery layer 2. For example, the plurality of battery modules 3 are sequentially arranged in the transverse direction, or the plurality of battery modules 3 are sequentially arranged in the longitudinal direction, or the plurality of battery modules 3 are arranged in a plurality of rows and columns along the transverse direction and the longitudinal direction. In addition, the plurality of battery modules 3 may be connected in series, in parallel, or in parallel and in series.

Therefore, by arranging the battery cells 4 in groups, an improvement in assembly efficiency of the battery 1 is facilitated, and simplification on an electrical connection is beneficial. Moreover, since the first housing portion 51 has one battery layer 2 or a plurality of battery layers 2 arranged in the vertical direction, and the second housing portion 52 has one battery layer 2 or a plurality of battery layers 2 arranged in the vertical direction, it is possible to simply and effectively ensure that a total height of battery cells 4 accommodated in the second housing portion 52 is greater than a total height of battery cells 4 accommodated in the first housing portion 51, which is beneficial to full utilization of the space and the improvement of the energy density of the battery 1.

In some embodiments, a number of layers of battery layers 2 in the second housing portion 52 is greater than a number of layers of battery layers 2 in the first housing portion 51. Therefore, when a height of each of the battery layers 2 in the second housing portion 52 is the same as or close to a height of each of the battery layers 2 in the first housing portion 51, by controlling the number of layers, it can be easily realized that the total height of the battery cells 4 accommodated in the second housing portion 52 is greater than the total height of the battery cells 4 accommodated in the first housing portion 51, which is beneficial to the full utilization of space and the improvement of the energy density of the battery 1.

Optionally, a height of each battery layer 2 in the second housing portion 52 is the same as a height of each battery layer 2 in the first housing portion 51. Therefore, since the height of each battery layer 2 in the second housing portion 52 is the same as the height of each battery layer 2 in the first housing portion 51, position exchange of the battery modules 3 can be realized, and the assembly difficulty is lowered. Moreover, battery cells 4 with a same specification may be used to combine various battery modules 3, which simplifies the overall design and reduces the cost.

Alternatively, in some embodiments, a height of at least one battery layer 2 in the second housing portion 52 is different from a height of at least one battery layer 2 in the first housing portion 51. For example, the height of the at least one battery layer 2 in the second housing portion 52 is greater than the height of the at least one battery layer 2 in the first housing portion 51. For another example, the height of the at least one battery layer 2 in the second housing portion 52 is smaller than the height of the at least one battery layer 2 in the first housing portion 51. Therefore, flexible design can be implemented to satisfy different design requirements.

Specifically, the height of the battery layer 2 refers to a dimension of the battery layer 2 along the vertical direction, and is determined based on a placement manner of the battery module 3 included in the battery layer 2. For example, when a length direction of the battery module 3 is in the vertical direction, a length of the battery module 3 is the height of the battery layer 2. For another example, when a thickness direction of the battery module 3 is in the vertical direction, a thickness of the battery module 3 is the height of the battery layer 2. For another example, when a width direction of the battery module 3 is in the vertical direction, a width of the battery module 3 is the height of the battery layer 2.

Therefore, when the heights of the two battery layers 2 are different, there may be a plurality of manners. For example, it can be that the battery modules 3 included in the two battery layers 2 have the same placement manner but different specifications. For example, two battery modules 3 have length directions each as longitudinal direction, width directions each as transverse direction, and thickness directions each as vertical direction, but have different thickness dimensions. For another example, it can also be that the battery modules 3 included in the two battery layers 2 have different placement manners but the same specification. For example, the two battery modules 3 are the same in length dimension, width dimension, and height dimension, but a length of one of the two battery modules 3 is vertical, a thickness of the other one of the two battery modules 3 is vertical, and the like.

In some embodiments, there are one battery layer 2 in the first housing portion 51 and two battery layers 21 in the second housing portion 52. A lower battery layer 2 in the second housing portion 52 has a same height as the battery layer 2 in the first housing portion 51 and is flush with the battery layer 2 in the first housing portion 51, and an upper battery layer 2 in the second housing portion 52 has a height greater than or equal to the height of the lower battery layer 2 in the second housing portion 52.

In the above embodiment, the lower battery layer 2 in the second housing portion 52 has a same height as the battery layer 2 in the first housing portion 51 and is flush with the battery layer 2 in the first housing portion 51, which means that a bottom surface of the lower battery layer 2 in the second housing portion 52 is flush with a bottom surface of the battery layer 2 in the first housing portion 51, and a top surface of the lower battery layer 2 in the second housing portion 52 is flush with a top surface of the battery layer 2 in the first housing portion 51.

Therefore, the space in the housing 5 can be fully utilized to simplify the arrangement of the battery module 3. For example, compatibility and interchangeability and the like between a battery module 3 of the lower battery layer 2 in the second housing portion 52 and a battery module 3 of the battery layer 2 in the first housing portion 51 can be realized. Moreover, it can be effectively ensured that the total height of the battery cells 4 accommodated in the second housing portion 52 is greater than the total height of the battery cells 4 accommodated in the first housing portion 51. Therefore, it is beneficial to the sufficient utilization of the space and the improvement of the energy density of the battery 1. In addition, it can also be ensured that a distance of the battery 1 above the ground is sufficient, which is beneficial to battery swapping and that the battery 1 is protected from being bumped.

In some embodiments, the plurality of battery layers 2 are disposed in the second housing portion 52, and arrangement directions of the plurality of battery modules 3 in at least two battery layers 2 are perpendicular. For example, a plurality of battery modules 3 in at least one battery layer 2 in the second housing portion 52 are sequentially arranged in the transverse direction, and a plurality of battery modules 3 in the at least one battery layer 2 in the second housing portion 52 are sequentially arranged in the longitudinal direction simultaneously.

Alternatively, in some other embodiments, the plurality of battery layers 2 are disposed in the second housing portion 52, and the arrangement directions of the plurality of battery modules 3 in each of the battery layers 2 are each the same. For example, the plurality of battery modules 3 in each of battery layers 2 in the second housing portion 52 are sequentially arranged in the transverse direction. For another example, the plurality of battery modules 3 in each of battery layers 2 in the second housing portion 52 are each sequentially arranged in the longitudinal direction. Therefore, flexible arrangements of the battery modules 3 in the second housing portion 52 can be achieved, and different actual requirements are satisfied.

In some embodiments, one battery layer 2 is disposed in the first housing portion 51, and arrangement directions of a plurality of battery modules 3 in the battery layer 2 in the first housing portion 51 are the same as arrangement directions of a plurality of battery modules 3 in at least one battery layer 2 in the second housing portion 52. For example, the plurality of battery modules 3 in the battery layer 2 in the first housing portion 51 are sequentially arranged in the transverse direction, and the plurality of battery modules 3 in the at least one battery layer 2 in the second housing portion 52 are also sequentially arranged in the transverse direction. For another example, the plurality of battery modules 3 in the battery layer 2 in the first housing portion 51 are sequentially arranged in the longitudinal direction, and the plurality of battery modules 3 in the at least one battery layer 2 in the second housing portion 52 are also sequentially arranged in the longitudinal direction.

Alternatively, in some other embodiments, one battery layer 2 is disposed in the first housing portion 51, and the arrangement directions of the plurality of battery modules 3 in the battery layer 2 in the first housing portion 51 are perpendicular to the arrangement directions of the plurality of battery modules 3 in the at least one battery layer 2 in the second housing portion 52. For example, the plurality of battery modules 3 in the battery layer 2 in the first housing portion 51 are sequentially arranged in the transverse direction, and the plurality of battery modules 3 in the at least one battery layer 2 in the second housing portion 52 are sequentially arranged in the longitudinal direction. For another example, the plurality of battery modules 3 in the battery layer 2 in the first housing portion 51 are sequentially arranged in the longitudinal direction, and the plurality of battery modules 3 in the at least one battery layer 2 in the second housing portion 52 are sequentially arranged in the transverse direction.

Therefore, the flexible arrangements of the battery modules 3 in the first housing portion 51 and the second housing portion 52 can be realized, and different actual requirements are satisfied.

In some embodiments, the plurality of battery modules 3 in the at least one battery layer 2 are arranged in the longitudinal direction, and a length direction of each of the plurality of battery modules 3 in the at least one battery layer 2 extends in the transverse direction. Therefore, the space can be fully utilized, and the battery modules 3 are convenient to be arranged to form the battery layer 2.

In some embodiments, the plurality of battery modules 3 in the at least one battery layer 2 are arranged in the transverse direction, and the length direction of each of the plurality of battery modules 3 in the at least one battery layer 2 extends in the longitudinal direction. Therefore, the space can be fully utilized, and the battery modules 3 are convenient to be arranged to form the battery layer 2.

Therefore, the flexible design of the battery layer 2 can be implemented, and different actual requirements are satisfied.

In some embodiments, the plurality of battery cells 4 included in the at least one battery module 3 are arranged along one of the length direction, the width direction, and the thickness direction of the battery module 3.

For example, the plurality of battery cells 4 included in the at least one battery module 3 are arranged along the length direction of the battery module 3. For another example, the plurality of battery cells 4 included in the at least one battery module 3 are arranged along the width direction of the battery module 3. For another example, the plurality of battery cells 4 included in the at least one battery module 3 are arranged along the thickness direction of the battery module 3.

Therefore, the flexible design of the battery module 3 can be implemented, and different actual requirements are satisfied.

In some embodiments, as shown in FIG. 3 and FIG. 11, the battery 1 includes a temperature adjustment member 8. The temperature adjustment member 8 includes at least one of a first adjustment plate 81, a second adjustment plate 82, a third adjustment plate 83, a fourth adjustment plate 84, and a fifth adjustment plate 85. The first adjustment plate 81 is disposed between two battery layers 2 disposed vertically adjacent to each other. The second adjustment plate 82 is disposed at a bottom of a bottom battery layer 2. The third adjustment plate 83 is disposed at a top of a top battery layer 2. The fourth adjustment plate 84 is disposed between two adjacent battery modules 3 in the same battery layer 2. The fifth adjustment plate 85 is disposed between two adjacent battery cells 4 in the same battery module 3. Therefore, by setting the temperature adjustment member 8 in at least one form, adjustment on the temperature of the battery cell 4 can be realized, so that the battery 1 can operate at a suitable temperature, thereby improving the operation reliability and the service life of the battery 1, and the operation energy efficiency of the battery 1.

In some embodiments, as shown in FIG. 6 and FIG. 11, the battery 1 includes a temperature adjustment member 8. The temperature adjustment member 8 is disposed in each of the first housing portion 51 and the second housing portion 52. Therefore, the battery cells 4 in the first housing portion 51 and the battery cells 4 in the second housing portion 52 can each obtain temperature adjustment, so that the battery 1 can operate at a proper temperature, to improve the operation reliability and the service life of the battery 1 and improve operation energy efficiency of the battery 1.

For example, in some specific examples, as shown in FIG. 6 and FIG. 11, the temperature adjustment member 8 includes a common horizontal plate 86. A part of the common horizontal plate 86 is located in the first housing portion 51, and the rest of the common horizontal plate 86 is located in the second housing portion 52. Therefore, the design of the temperature adjustment member 8 can be simplified, and the assembly is simplified.

In some embodiments, as shown in FIG. 8, the docking structure 7 is located outside the housing 5, i.e., the docking structure 7 may be integrally disposed at an exterior of the housing 5. Therefore, the docking structure 7 can be prevented from occupying a space of the housing 5 for storing the battery cell 4, and the energy density of the battery 1 is improved.

For example, in some specific examples, as shown in FIG. 6 and FIG. 8, the docking structure 7 includes a box body 72, a docking body 73, and a docking header 74. The box body 72 is disposed above the bottom wall 10a of the recess 10. The docking body 73 is disposed in the box body 72. The docking header 74 is disposed outside the box body 72. The docking header 74 is connected to the docking body 73. The docking body 73 is connected to a circuit and/or a fluid circuit in the housing 5. Therefore, the docking structure 7 is simple and convenient to be processed and mounted, which can effectively prevent the docking structure 7 from occupying the space of the housing 5 for storing the battery cell 4, thereby improving the energy density of the battery 1.

In the above embodiment, the composition of the docking body 73 is not limited. When used for implementing liquid conduction, the docking body 73 may include a pipeline, or may include a pipeline, a control valve, and the like. When used for implementing current conduction, the docking body 73 may include a wire, or may include a wire, a circuit board, and the like, and details are omitted herein.

In the above embodiments, the box body 72 may have a bottom wall or may have no bottom wall, which may be set according to an actual situation. In addition, the position of the housing 5 corresponding to the bottom wall of the box body 72 (for example, at least part of the bottom wall 10a of the recess 10) may be hollowed-out or of an entity structure, which may be set according to an actual situation.

In some embodiments, the housing 5 of the battery 1 may be made of a high-strength material, to ensure that reliability of a connection of the mounting structure 6 disposed on the housing with the vehicle-bottom longitudinal beam 200. For example, the housing 5 of the battery 1 may be made of a high-strength steel rolled profile or the like.

The vehicle 1000 according to the embodiments of the present disclosure is described below with reference to the accompanying drawings.

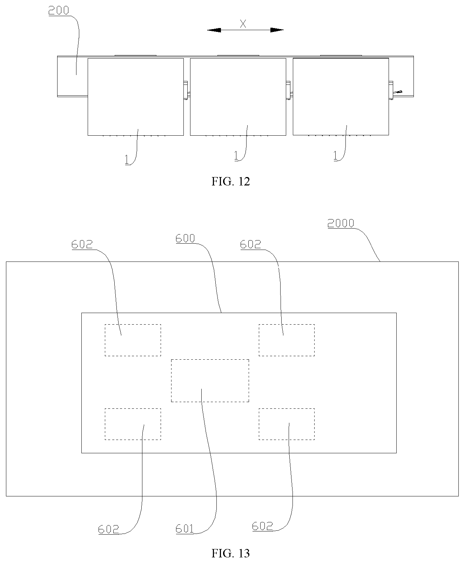

As shown in FIG. 1 and FIG. 12, the vehicle 1000 may include the vehicle-bottom longitudinal beam 200 and the battery 1 according to any one of the embodiments of the present disclosure.

In some embodiments, as shown in FIG. 4 and FIG. 5, the vehicle-bottom longitudinal beam 200 has a connection structure 300 defined thereon. The mounting structure 6 is detachably connected to the connection structure 300, and at least one of the mounting structure 6 and the connection structure 300 is a locking structure. For example, the mounting structure 6 is a locking structure. For another example, the connection structure 300 is a locking structure. For another example, the mounting structure 6 and the connection structure 300 are each locking structures.

The locking structure has a locked state and an unlocked state. In the locked state, the mounting structure 6 and the connection structure 300 are in the locked state and cannot be separated from each other, and the battery 1 is in a firmly mounted state. In the unlocked state, the mounting structure 6 and the connection structure 300 are in the unlocked state and can be separated from each other, and the battery 1 can be detached from the vehicle 1000.

Therefore, by arranging the at least one of the mounting structure 6 and the connection structure 300 as the locking structure, it is beneficial to firm mounting of the battery 1 and satisfaction of disassembly and replacement requirements for the battery 1. Specifically, a specific type of the locking structure is unlimited, for example, may include a screw, a padlock, or the like.

In some embodiments, as shown in FIG. 12, an unlocking position of the locking structure is located at a longitudinal outer side of the battery 1. For example, the unlocking position is located in front of the battery 1 or behind the battery 1, like located between two adjacent batteries 1 in the longitudinal direction. Therefore, since the unlocking position of the locking structure is located at the longitudinal outer side of the battery 1, the unlocking position is not shielded by the battery 1, so that unlocking operation and locking observation on the locking structure can be conveniently performed.

Moreover, there is no need to punch holes from the bottom of the battery 1 in the vertical direction, so that an unlocking member extends into the holes in the vertical direction to touch the locking structure for unlocking. In this way, it can avoid that the space inside the battery 1 is occupied because of hole punching, and the energy density of the battery 1 can be further improved. Moreover, the problem of difficult sealing of the battery 1 because of hole punching is avoided, which is favorable to the processing and design of the battery 1.

For example, when a plurality of batteries 1 are provided, if the unlocking position of the locking structure is located at the longitudinal outer side of the battery 1, a gap between two adjacent batteries 1 may be 30 mm or more, thereby facilitating unlocking.

In some embodiments, as shown in FIG. 10 and FIG. 11, the vehicle-bottom longitudinal beam 200 includes two longitudinal beams 201 arranged in parallel. The docking structure 7 is disposed at the top of the battery 1, and may be extended into a space between the two longitudinal beams 201. In this way, the docking structure 7 can be prevented from occupying other spaces, and the energy density of the battery 1 can be improved by using the saved space. Moreover, the docking structure 7 can be prevented from being bumped and damaged, and prevented from being corroded by the splashed muddy water, thereby improving the safety and reliability of the battery 1.

In some embodiments, as shown in FIG. 1 and FIG. 2, a vertical distance between a bottom surface of a wheel of the vehicle 1000 and the bottom surface of the battery 1 is H1, and a vertical distance between the bottom surface of the wheel of the vehicle 1000 and the bottom surface of the vehicle-bottom longitudinal beam 200 is H2.A height of a battery-swapping transport vehicle is H4. A vertical height of the battery 1 is L3. H2≥L3+H4, and H1 > H4. For example, H2=700mm, L3=600mm, H4=100mm, and H1≥300mm. In this way, the battery swapping can be realized without the need for digging a trench at the battery swapping station 2000 and lifting the vehicle 1000. Moreover, it is possible to better ensure that the height of the battery 1 in the vertical direction fully utilizes the space, and the battery 1 is adapted to maintain a safe distance from the ground.

In some embodiments, as shown in FIG. 1 and FIG. 2, the longitudinal dimension L1 of the battery 1 is smaller than the transverse dimension L2 of the battery 1, indicating that the transverse dimension L2 of the battery 1 is large, and the longitudinal dimension L1 of the battery 1 is small. When the transverse dimension L2 of the battery 1 cannot exceed the transverse width of the vehicle 1000, the longitudinal dimension L1 of the battery 1 can be ensured not to be too large, and the dimension of the battery 1 is small. Therefore, it is beneficial to the improvement of the mounting reliability of the battery 1 and the mounting of the battery 1. For example, when there are two or three sub-mounting portions 61 at the same side wall arranged at intervals in the longitudinal direction, the stress of each sub-mounting portion 61 can be better reduced, thereby ensuring the mounting reliability of the battery 1. Moreover, since the dimension of the single battery 1 is small, the deformation of the battery 1 can be reduced, which is beneficial to the improvement of the assembly success rate of the battery 1. A battery swapping station 2000 according to the embodiments of the present disclosure is described below with reference to the accompanying drawings.

As shown in FIG. 1 and FIG. 13, the battery swapping station 2000 is configured to replace the battery 1 for the vehicle 1000 according to any one of the embodiments of the present disclosure.

In some embodiments, the battery swapping station 2000 includes a battery swapping region 600. The vehicle 1000 is adapted to replace the battery 1 in the battery swapping region 600. The battery swapping region 600 includes a first region 601 and a second region 602. The first region 601 is adapted to be located directly below the battery 1. The second region 602 is configured to support a front wheel 400 and a rear wheel 500 that are adjacent to the battery 1, and the first region 601 is flush with the ground of the second region 602.

Since a height of the bottom surface of the battery 1 above the ground according to some embodiments of the present disclosure can be improved, the battery swapping station 2000 can cancel the whole vehicle lifting or trench digging requirement, thereby simplifying the site layout of the battery swapping station 2000 and improving the space utilization rate.

Optionally, the whole ground of the battery swapping region 600 is a plane. Therefore, construction difficulty of the battery swapping station 2000 is lowered. It is beneficial to a reduction in a construction cost of the battery swapping station 2000.

Referring to FIG. 1 and FIG. 13, the following describes a battery 1 and a battery swapping method for the vehicle 1000 in which the battery 1 is applied according to a specific embodiment of the present disclosure.

A plurality of batteries 1 are mounted on the vehicle-bottom longitudinal beam 200 of the vehicle 1000 and arranged along the length direction of the vehicle-bottom longitudinal beam 200. Each battery 1 can be detached separately relative to the vehicle-bottom longitudinal beam 200. A recess 10 is defined at the top of the battery 1 and accommodates the vehicle-bottom longitudinal beam 200. In this way, the battery 1 can utilize the space at the two transverse sides of the vehicle-bottom longitudinal beam 200 and the space below the vehicle-bottom longitudinal beam 200 to ensure the energy density of the battery 1 and increase the height of the battery 1 above the ground.

Two battery layers 2 are arranged in parts of the battery 1 located at the two transverse sides of the vehicle-bottom longitudinal beam 200, respectively. Each battery layer 2 includes a plurality of battery modules 3 arranged in parallel, and each battery module 3 includes a plurality of battery cells 4 arranged in parallel, so that the spaces at the two transverse sides of the vehicle-bottom longitudinal beam 200 are fully and effectively utilized. One battery layer 2 is arranged in a part of the battery 1 located below the vehicle-bottom longitudinal beam 200. The battery layer 2 includes a plurality of battery modules 3 arranged in parallel. Each battery module 3 includes a plurality of battery cells 4 arranged in parallel. Therefore, while the space underneath the vehicle-bottom longitudinal beam 200 is fully utilized, a sufficient space between the bottom surface of the battery 1 and the ground can be effectively ensured. In this way, on the one hand, the scraping between the bottom surface of the battery 1 and the protrusion of ground can be avoided, and the battery 1 can be effectively protected. On the other hand, a sufficient space can be reserved for the battery swapping, so that without the need for digging a trench at the battery swapping station 2000 and lifting the vehicle 1000, the battery swapping can be realized, the site arrangement of the battery swapping station 2000 is simplified, and the space utilization rate is improved.

Specifically, the mounting structure 6 is disposed at each of the two transverse side walls 10b of the recess 10. Each mounting structure 6 includes two to three sub-mounting portions 61 arranged at intervals in the longitudinal direction. The connection structure 300 is arranged at a position of each of two side surfaces of the vehicle-bottom longitudinal beam 200 corresponding to each mounting structure 6. One of the sub-mounting portions 61 and the connection structure 300 is a mounting pin, the other one of the sub-mounting portions 61 and the connection structure 300 is a battery swapping lock. When the battery 1 is replaced, the battery 1 is pushed upwards, and the mounting pin is sandwiched into the battery swapping lock, so that the mounting of the battery 1 to the vehicle-bottom longitudinal beam 200 can be completed. Since the plurality of batteries 1 are mounted on the vehicle-bottom longitudinal beam 200, the dimension of each battery 1 is small, which not only can improve the mounting reliability of each battery 1, but is also beneficial to the battery swapping design of each battery 1.

When the battery in the related art is mounted to the vehicle, the battery pack is pre-mounted on the battery swapping frame, and then the whole battery swapping frame is fixed to a vehicle chassis. Such a mounting mode mainly has the following problems.

First, since the battery pack is pre-mounted on the battery swapping frame, the whole battery swapping unit will be large and heavy, and the battery swapping station matched with the battery swapping unit needs to be trenched or lift the vehicle. Moreover, the battery-swapping transport vehicle designed in a matched manner needs to be made larger, more load-bearing, complex in design, and high in cost.

For the battery 1 according to the embodiments of the present disclosure, since the battery 1 can be mounted on the vehicle-bottom longitudinal beam 200 through the mounting structure 6 of the battery 1 itself, the battery swapping frame can be omitted, which lowers the battery swapping cost and improve the battery swapping efficiency. Moreover, the height of the battery 1 above the ground can be increased, eliminating the need to lift the entire vehicle or dig a trench for the passage of the matched battery-swapping transport vehicle, thereby lowering site configuration difficulty of the battery swapping station 2000. Moreover, the design difficulty of the matched battery-swapping transport vehicle can also be lowered, and the cost is lowered.

Second, battery-swapping locking-attachment points on the battery swapping frame are each located at an outer peripheral wall of the battery swapping frame, and a span between a plurality of battery-swapping locking-attachment points is large, so that a deviation between the plurality of battery-swapping locking-attachment points is also large. Therefore, a locking-attachment time is lengthened during battery swapping, and a battery-swapping locking-attachment success rate is reduced, so that the battery swapping efficiency is limited. Moreover, a torque borne by the battery-swapping locking-attachment point is large, which has extremely high requirements for a strength of a quick-change lock, and the mounting reliability of the battery is low.

For the battery 1 according to the embodiments of the present disclosure, since the battery 1 can be mounted on the vehicle-bottom longitudinal beam 200 through the mounting structure 6 of the battery 1 itself, and since the mounting structure 6 faces towards the vehicle-bottom longitudinal beam 200, the deviation between the locking-attachment points can be reduced, so that the locking-attachment time is shortened during battery swapping, and the battery-swapping locking-attachment success rate is improved. Therefore, the battery swapping efficiency is improved. Moreover, the torque borne by the mounting structure 6 is small, and the mounting reliability of the battery 1 is high, which has low requirements for the strength of the mounting pin and the battery swapping lock.

Third, because the battery pack is formed integrally together as an integral pack, a larger battery swapping frame is required to bear the stress. Therefore, a space occupied by the battery swapping frame is also larger, which causes an electric quantity of the battery pack to not be made large, thereby limiting a distance between the battery swapping stations, increasing the number of battery swapping stations, and improving the costs.

For the battery 1 according to the embodiments of the present disclosure, since the battery 1 can be mounted on the vehicle-bottom longitudinal beam 200 through the mounting structure 6 of the battery 1 itself, the battery swapping frame is omitted. Moreover, a plurality of batteries 1 are provided, so that the electric quantity may be large, which shortens the distance between the battery swapping station 2000 and the battery swapping station 2000, reduces the number of battery swapping stations 2000, and lowers the cost.

Fourth, only one battery pack can be matched for one vehicle model, and only a single battery pack can be matched for different application scenes, so that the battery swapping flexibility is low, and the compatibility is poor.

For the battery 1 according to the embodiments of the present disclosure, the plurality of batteries 1 may be provided and separately and detachably mounted to the vehicle-bottom longitudinal beam 200. In this way, the compatibility can be obviously improved, and the battery swapping flexibility is obviously improved. Moreover, the adaptability and throughput of the battery swapping station 2000 can be increased, the number of battery swapping stations 2000 is reduced, the distance between the battery swapping stations 2000 is reduced, and the input cost is lowered.

It should be noted that embodiments of the present disclosure and features disclosed in the embodiments of the present disclosure can be combined with each other without conflicting.

While preferred embodiments of the present disclosure have been described above, the present disclosure is not limited thereto. For those skilled in the art, various changes and modifications can be made to the present disclosure. Any modification, equivalent replacement, improvement, etc., made within the spirit and principle of the present disclosure shall fall within the scope of the present disclosure.

## Claims

1. A battery, comprising:
a battery cell;
a housing, the battery cell being accommodated in the housing;
a mounting structure disposed at the housing, the mounting structure being adapted to be located between the housing and a vehicle-bottom longitudinal beam of a vehicle, and the mounting structure being configured to detachably mount the battery to the vehicle-bottom longitudinal beam; and
a docking structure disposed at the housing, the docking structure being configured to dock with the vehicle to allow for current conduction and/or liquid conduction.

2. The battery according to claim 1, wherein the docking structure is located at other surfaces of the housing other than a bottom wall and an outer peripheral wall of the housing.

3. The battery according to claim 2, wherein the housing has a recess defined at a top of the housing, the recess being adapted to accommodate the vehicle-bottom longitudinal beam, and the docking structure being located in the recess.

4. The battery according to claim 3, wherein the docking structure is located at a bottom wall of the recess.

5. The battery according to claim 3, wherein the docking structure is located at a side wall of the recess.

6. The battery according to claim 2, wherein the docking structure is disposed at a top wall of the housing.

7. The battery according to any one of claims 2 to 4 and 6, wherein the docking structure is located at a transverse center position of a top of the housing.

8. The battery according to any one of claims 2 to 7, wherein the docking structure is located at a longitudinal center position of a top of the housing.

9. The battery according to any one of claims 1 to 8, wherein a docking surface of the docking structure faces upwards to allow for docking in a vertical direction.

10. The battery according to any one of claims 1 to 8, wherein a docking surface of the docking structure faces horizontally to allow for docking in a horizontal direction.

11. The battery according to any one of claims 1 to 10, wherein the docking structure comprises a plurality of sub-docking portions having different docking functions.

12. The battery according to claim 11, wherein the plurality of sub-docking portions has the same docking direction.

13. The battery according to claim 11 or 12, wherein the plurality of sub-docking portions is arranged at intervals in a transverse direction and/or a longitudinal direction of the housing.

14. The battery according to any one of claims 1 to 13, wherein the docking structure and the mounting structure are located on a surface of the housing at one side of the housing.

15. The battery according to any one of claims 1 to 13, wherein the docking structure and the mounting structure are located on surfaces of the housing at different sides of the housing.

16. The battery according to any one of claims 1 to 15, wherein a position of the docking structure is adjustable relative to the housing.

17. The battery according to any one of claims 1 to 16, wherein the mounting structures at the housing are transversely spaced apart from each other to be respectively disposed at two transverse sides of the vehicle-bottom longitudinal beam.

18. The battery according to claim 17, wherein the mounting structures at the two transverse sides are symmetrically arranged.

19. The battery according to claim 17, wherein the mounting structures at the two transverse sides are offset from each other in a longitudinal direction.

20. The battery according to any one of claims 1 to 19, wherein the housing has a recess defined at a top of the housing, the recess being adapted to accommodate the vehicle-bottom longitudinal beam, and the mounting structure being located in the recess.

21. The battery according to claim 20, wherein the mounting structure is located on at least one of two transverse side walls of the recess.

22. The battery according to claim 21, wherein the mounting structure comprises a plurality of sub-mounting portions disposed at one side wall.

23. The battery according to claim 22, wherein two or three sub-mounting portions comprised in the mounting structure are provided.

24. The battery according to claim 22 or 23, wherein the plurality of sub-mounting portions at one side wall are arranged at intervals in a longitudinal direction.

25. The battery according to any one of claims 20 to 24, wherein the mounting structure is located at a position of a side wall of the recess close to a bottom wall of the recess.

26. The battery according to any one of claims 1 to 25, wherein the mounting structure is located at a vertical center position of the housing.

27. The battery according to any one of claims 1 to 26, wherein a position of the mounting structure is adjustable relative to the housing.

28. The battery according to any one of claims 1 to 27, wherein a longitudinal dimension L1 of the battery is smaller than a transverse dimension L2 of the battery.

29. The battery according to any one of claims 1 to 28, wherein the housing comprises a housing body and a housing cover, the housing body being an integrally-formed part and having an opening defined thereon, the housing cover covering the opening, wherein:
the mounting structure and the docking structure are each disposed at the housing body or at the housing cover; or
one of the mounting structure and the docking structure is disposed at the housing body, and another one of the mounting structure and the docking structure is disposed at the housing cover.

30. The battery according to any one of claims 1 to 29, wherein the docking structure is located outside the housing.

31. A vehicle, comprising:
a vehicle-bottom longitudinal beam; and
the battery according to any one of claims 1 to 30.

32. The vehicle according to claim 31, wherein the vehicle-bottom longitudinal beam has a connection structure, the mounting structure being detachably connected to the connection structure, at least one of the mounting structure and the connection structure being a locking structure, and an unlocking position of the locking structure being located at a longitudinal outer side of the battery.

33. The vehicle according to claim 31 or 32, wherein the vehicle-bottom longitudinal beam comprises two longitudinal beams arranged in parallel, the docking structure being disposed at a top of the battery and configured to be extended into a space between the two longitudinal beams.

34. A battery swapping station, configured to replace a battery for the vehicle according to any one of claims 31 to 33.

35. The battery swapping station according to claim 34, comprising a battery swapping region, the vehicle being adapted to replace the battery in the battery swapping region, the battery swapping region comprising a first region and a second region, the first region being adapted to be located directly below the battery, the second region being configured to support a front wheel and a rear wheel that are adjacent to the battery, and a ground at the first region being flush with a ground at the second region.
